(19) Europäisches Patentamt
European Patent Office
Office européen des brevets

(11) EP 0 724 006 A1

# (12) EUROPEAN PATENT APPLICATION

(43) Date of publication:
**31.07.1996 Bulletin 1996/31**

(51) Int. Cl.$^6$: **C09K 19/54**, C09K 19/38, C08G 59/24, C08G 59/50

(21) Application number: **95203618.4**

(22) Date of filing: **22.12.1995**

(84) Designated Contracting States:
**DE FR GB IT NL**

(30) Priority: **27.12.1994 IT MI942648**

(71) Applicant: **Sniaricerche S.C.P.A.**
**I-75010 Pisticci Scalo (IT)**

(72) Inventors:
- **Hakemi, Hassan-Ali**
  **I-20635 Lissone (MI) (IT)**
- **Pane, Serafina**
  **I-8810 Catanzaro (IT)**
- **Carfagna, Cosimo**
  **I-80126 Napoli (IT)**

(74) Representative: **Smulders, Theodorus A.H.J., Ir. et al**
**Vereenigde Octrooibureaux**
**Nieuwe Parklaan 97**
**2587 BN 's-Gravenhage (NL)**

## (54) Liquid crystalline epoxy resins in polymer dispersed liquid crystal composites

(57) A polymer-dispersed liquid crystal composite having a polymer continuous phase and a liquid crystal discontinuous phase characterized in that the polymer continuous phase contains a liquid crystalline main chain thermoset epoxy resin as a compatible component of that phase; and a method of making the composite and devices incorporating the composite.



Printed by Rank Xerox (UK) Business Services
2.13.0/3.4

## Description

### FIELD OF THE INVENTION

The invention relates to polymer dispersed liquid crystal composites and, more particularly, to polymer dispersed liquid crystal composites having a polymer continuous phase and a liquid crystal discontinuous phase characterized in that the polymer continuous phase contains a thermoset based on a liquid crystalline main chain epoxy resin as a compatible component of that phase. The invention also relates to a method of making such polymer dispersed liquid crystal composites, and to polymer dispersed liquid crystal devices containing the composites.

### BACKGROUND TO THE INVENTION

Composites of liquid crystals dispersed in a polymer matrix, such as polymer-dispersed liquid crystal (PDLC) and nematic curvilinearly aligned phase (NCAP) devices, generally comprise droplets of a biaxially birefringent, nematic liquid crystal material dispersed in a transparent polymeric matrix. Such devices are of interest because they can be electrically controlled or switched between relatively translucent (i.e. light scattering or nearly opaque) and relatively transparent (i.e. light transmitting) states. This occurs because the liquid crystal droplets exhibit birefringence, i.e. optical anisotropy. All liquid crystals have two indices of refraction: an extraordinary index of refraction measured along the long axis of the rigid rodlike liquid crystals, and a smaller ordinary index of refraction measured in a plane perpendicular to the long axis. As a result, the droplets strongly scatter light when they are randomly oriented in the matrix and the devices appear translucent (or nearly opaque). On the application of either an electric field or a magnetic field, however, the long axes of the liquid crystal droplets become aligned along the direction of the electric/magnetic field vector and more directly transmit light.

If the refractive indices of the liquid crystal material and the polymer matrix are closely matched while in the field-induced, aligned state, the devices appear transparent. Thus, upon the application of an electric or magnetic field, for example, the device switches from a state in which it appears translucent (nearly opaque) to a state in which it appears transparent. Upon removal of the electrical or magnetic field, the device reverts to a translucent (opaque) state.

Devices containing composites of liquid crystals dispersed in a polymer matrix have found use as light valves, filters, shutters, information displays, architectural glass, windows, among others.

The compositing of liquid crystals in a polymer matrix is well known in the art. An early development in the use of such composites is described by Elliot in French Patent 2,139,537. Elliot used polymers as binders for liquid crystals by emulsifying the liquid crystals in a polymer and casting the composite into films. French Patent 2,139,537 states, "it is advantageous to select a liquid crystal substance which has a refraction index similar to that of the film substrate and the binder, to avoid undesirable light diffusion effects from the emulsion film". He noted that "most organic compounds of this type have a similar refraction index to that of numerous substances among the polymers which could be used for the film or for the binder (i.e. about 1.5)". That technology was adopted by Fergason and called nematic curvilinearly aligned phases ("NCAP") liquid crystal by Fergason (see Fergason, et al., U.S. 4,789,858).

Another process for making composites of liquid crystals in polymers is called polymer dispersed liquid crystals (PDLC). It involves a number of phase separation processes for making uniform liquid crystal droplets in a polymer binder. Such phase separation processes include:

[1] Polymerization-Induced Phase Separation (PIPS). In polymerization- induced phase separation, liquid crystal microdroplets form spontaneously in a polymer matrix upon the separation of the liquid crystal and matrix phases. Phase separation is induced by causing the uncured matrix material to polymerize. Phase separation by polymerization is useful when prepolymer materials are miscible with low molecular weight liquid crystal compounds. A homogeneous solution is made by mixing the prepolymer with the liquid crystal. Polymerization is achieved through a condensation reaction, as with epoxy resins, through free radical polymerization, as with a vinyl monomer catalyzed with a free radical initiator such as a benzoylperoxide, or through a photo-initiated polymerization. The solubility of the liquid crystal decreases in the growing polymers until the liquid crystal phase separates, forming droplets. The droplets isolated from each other and form a discontinuous phase within the polymer phase. The polymer phase is a continuous phase. The droplets grow until gelating of the polymer locks in the droplet morphology. According to *Doane et al.*, "Polymer Dispersed Liquid Crystals for Display Application," Mol. Cryst. Liq. Cryst., 1988, Vol. 165, pp. 511-532, 512, droplet size and morphology are determined during the time between droplet nucleation and gelating of the polymer. Size is controlled by the rate of polymerization, the relative concentrations of materials, the types of liquid crystal and polymers used, and by such physical parameters as viscosity, rate of diffusion, and solubility of the liquid crystal in the polymer. The rate of polymerization is controlled by cure temperature for thermally cured polymers or by light intensity for photochemical polymerization. During the phase separation, a portion of the liquid crystal is retained in the polymeric continuous phase and acts as a plasticizer of the polymer.

[2] Phase Separation By Thermal Processes (TIPS). This process is useful for thermoplastics which melt below their decomposition temperature. A binary mixture of polymer and liquid crystal forms a solution at elevated temperature. Cooling the solution causes phase separation. The droplet size of the occluded material is governed by the rate of cooling and depends upon a number of material parameters, which include viscosity, chemical potentials, etc. As with the previous process, the liquid crystal droplets form a discontinuous phase and the polymer, the thermoplastic, forms a continuous phase. Also, some of the liquid crystal dissolves in the polymer and acts as a plasticizer.

[3] Phase Separation By Solvent Evaporation (SIPS). This is useful with thermoplastics which melt above the decomposition temperature of the thermoplastic or the liquid crystal, or where solvent coating techniques are used. The liquid crystal and polymer are dissolved in a common solvent forming a solution. The solvent is then removed by evaporation, resulting in phase separation and polymer solidification. In this case as with the others, the liquid crystal droplets form a discontinuous phase and the polymer forms a continuous phase.

Phase separation techniques are described by Taylor, U.S. 3,935,337, who discloses the preparation of a liquid-crystal containing structure by incorporating a liquid crystal substance into a polymeric matrix so as to form a thin, layer-like structure of controlled thickness. Taylor states that the liquid crystal substance may be incorporated into the polymeric matrix by mixing liquid crystals with a polymerizable monomer or prepolymer followed by polymerization, using a polymer (or polymerizable monomer) as the medium (solvent) in which liquid crystal synthesis is carried out. In the latter, the monomer medium, if it is a solvent, would, of course, be expected to dissolve the liquid crystal. Taylor's approaches include dissolving or dispersing the liquid crystal forming material in a polymer solution or molten polymer, then fabricating the polymer by a suitable technique (solution casting, molding, extrusion, etc.). Following solvent evaporation and/or cooling of molten polymer, the polymer acts as a binder and protective matrix for the liquid crystals.

Taylor includes a method of incorporation of liquid crystals into polymer matrices that involves the preparation of a mixture of the liquid crystal and polymerizable monomer or prepolymer, followed by polymerization. This technique permits "embedment" of liquid crystals in matrices of thermosetting plastics, including phenol-formaldehyde resins; urea-formaldehyde resins; melamine-formaldehyde resins; epoxy resins; polyurethanes; unsaturated polyesters; thermosetting acrylic resins.

Refinements to this technology are set forth in U.S. Patents Nos. 4,671,618; 4,673,255; 4,685,771; 4,688,900; 4,890,902; 4,994,204; 5,004,323; 5,087,387; 5,093,471; and 5,093,735.

The prime function of these technologies is to create a matrix system in which the liquid crystals are discretely and uniformly dispersed and where the matrix does not interfere with the function of the liquid crystals. In each of the above procedures, the structural relationship of the liquid crystal droplets to the polymer is, in essential respects, the same.

Polymers used in making PDLC composites are from two categories, thermosetting polymers and thermoplastic polymers. The polymers used in the present invention are primarily the thermosetting polymers. The thermosetting polymers undergo a cure reaction where they are transformed from a lower molecular weight composition with heat, with or without catalyst, hardeners, modifiers, and the like, into a higher molecular weight cured thermoset resin. Thermosetting is the act of using heat to transform the lower molecular weight precursor to the cured product. The temperature needed to accomplish this is dependent upon the time given to the reaction, catalysts employed, the relative reactivities of the complementary functional groups in the precursor, i.e., the general and common knowledge of those skilled in the thermosetting resin art. The thermosetting resin may be any of them known in the art.

Thermosetting epoxy matrix resins curing at temperature from × 350°F. (177°C.), or higher, to ×250°F. (121°C.) are suitable for use in PDLC composites and are the most common matrix resins, but matrices of bismaleimide (BMI), phenolic, polyester, PMR-15 polyimide and acetylene terminated resins, typical of high performance thermosetting resins, are usable in PDLC devices. Other thermosetting resins such as thermosetting resins from acrylics, polyurethanes, free-radically induced thermosetting resin, and the like, are usable in making PDLC composites. The typical thermosetting resin is an A-stage resin. In some cases, it may be desirable to utilize a B-stage resin but in the typical case, such is done in combination with an A-stage resin. Such B-stage resin will affect the viscosity of the resin formulation.

Epoxy resins are probably the most studied, and are a particularly preferred material, in making PDLC compositions. They are convenient to use for several reasons. It is easy to mix epoxy resins having different refractive indices to produce a binder with a refractive index precisely matched with the extraordinary refractive index of the liquid crystal.

There are a variety of epoxy resins suitable for use in making PDLC composites. All epoxy resins start with an epoxy precursor that is capable of homopolymerization reaction that is catalytically initiated, or coreacted with complementary functional compositions such as compounds with active hydrogen groups or other reactive groups capable of reacting with an epoxy resin so as to cause the molecular weight of the epoxy resin to increase. The performance of the cured epoxy resin is dependent upon the degree of functionality of the resin and the coreactant, the degree of aromaticity of the resin, the molecular weight of the epoxy resin and any coreactant prior to reaction and the level of cure of the resin. The coreactant can be a curing agent and/or hardener.

Conventional thermoset, including epoxy-based thermoset, polymer dispersed liquid crystal composites present certain performance problems related to the polymer matrix such as weaker mechanical properties such as high brittleness and low heat resistance, low electrical resistivity, slow curing times and a low stability range with respect to electrooptical properties.

A further problem with conventional polymer dispersed liquid crystal composite devices is "haze", more accurately termed the "angular dependence of light transmission." The phenomenon of "haze" is due to the perceived mismatch between the extraordinary refractive index of the liquid crystal microdroplets and the refractive index of the matrix when the viewing direction is different from the orthogonal.

An effort has been made in the art to overcome the problem of the angular dependence of light transmission. This effort involved the utilization of a birefringent liquid crystalline side-chain polymer in the polymer matrix instead of the conventional isotropic matrix (see Doane, U.S. patent 4,994,204). The goal was to produce, in a PDLC device, a birefringent, optically anisotropic matrix wherein the ordinary and extraordinary indices of refraction are matched for the polymer matrix material and the dispersed liquid crystal microdroplets. The cross-linked liquid crystal thermoset disclosed in U.S. patent 4,994,204 is based upon a mixture of a commercially available epoxy resin and a mesogenic single amine curing agent. The resultant thermoset is that of a side-chain cross-linked polymer and is not a main-chain or comb-like thermoset. A problem associated with the approach embodied in U.S. patent 4,994,204 relates to utilization of a curing agent containing a single amine. The use of such a curing agent markedly reduces the extent of cross-linking, which in turn reduces the glass transition temperature and mechanical performance of the resin, with the consequence that the solubility of liquid crystal microdroplets in the matrix after curing is increased. This is a significant disadvantage because of the critical importance of effecting and maintaining complete phase separation in polymer dispersed liquid crystal composites.

It would therefore be desirable to provide a component to the polymer matrix which would improve the mechanical and electrooptical performance properties of the polymer dispersed liquid crystal composite. The desired component would be compatible with the polymer matrix, would improve mechanical and electrooptical properties of the composite, and would, in at least some embodiments, reduce the angular dependence of light transmission but would not compromise the degree of phase separation between the polymer continuous and liquid crystal discontinuous phases of the composite.

Liquid crystalline thermosettable epoxy resins (LCERs) are well known in the art but have heretofore never been applied to the technology of polymer dispersed liquid crystal composites as main chain components of the thermoset in the polymer continuous phase matrix. The LCERs are known to exhibit enhanced thermal and mechanical properties, and have been shown to enhance tensile and flexural strength/modulus compared with conventional epoxy resin. See Hefner, Jr. et al., U.S. patent 4,962,163.

LCERs may be obtained by endcapping mesogenic or rigid-rod molecules with reactive epoxy groups in the presence of a suitable curing agent, typically a diamine. It is known that a mesogenic molecular arrangement is sustained over the cross-linking reaction when the reaction is performed in the thermal stability range of the liquid crystalline phase. See Carfagna et al., Liq. Cryst., 13(4), pp. 571-584 (1993). It is further known that the selection of both the glycidyl terminated component and the curing agent is important to achieve an ordered thermoset and that it is not essential that the epoxy monomer and the curing agent form a nematic phase by themselves.

## OBJECTS OF THE INVENTION

It is an object of the present invention to provide a polymer dispersed liquid crystal composite having as a compatible component of the polymer matrix thereof a liquid crystalline main chain epoxy resin.

It is another object of the present invention to provide a cross-linkable liquid crystalline main chain epoxy resin in the polymer continuous phase of a polymer dispersed liquid crystal composite in sufficient quantity to improve the electrooptical and mechanical properties of the composite.

It is still another object of the invention to provide a cross-linkable liquid crystalline main chain epoxy resin in the polymer continuous phase of a polymer dispersed liquid crystal composite in sufficient quantity to improve the electrooptical and mechanical properties of the composite and to create a polymer continuous phase that is anisotropic with respect to the transmission of light.

It is a further object of the invention to provide a method of making a polymer dispersed liquid crystal composite having as a compatible component of the polymer matrix thereof a cross-linkable liquid crystalline main chain epoxy resin.

It is a still further object of the invention to provide an electrooptical device containing a polymer dispersed liquid crystal composite having as a compatible component of the polymer matrix thereof a cross-linkable liquid crystalline main chain epoxy resin.

SUMMARY OF THE INVENTION

The invention relates to a polymer dispersed liquid crystal composite containing a polymer continuous phase and a liquid crystal discontinuous phase characterized in that the polymer continuous phase contains a liquid crystalline main chain epoxy thermoset resin as a compatible component of that phase.

The liquid crystalline main chain epoxy thermoset resin may be formed from a prepolymer material having the formula:

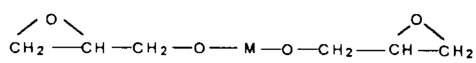

wherein M is a group containing two or more aromatic rings bridged by a rigid central linkage group. Typical rigid central linkage groups for bridging the aromatic rings include for example, a direct bond, or a - $CR_1=CR_1$-, -C=C-, -N=N-, $CR_1$=N, -$CR_1$=N-N=$CR_1$-, -$CR_1=CR_1$-CO-, -O-CO-$NR_1$-CO-, -N=$CR_1$-, -CO-O-CO-$NR_1$, -CO-$CR_1=CR_1$-, - CO-O-N=$CR_1$, $CR_1$=N-O-OC-, -CO-$NR_1$-$NR_1$-OC-, -CH =CH-O-OC-,-CO-O-CH=CH-, -O-OC-CH=CH-, -CH=CH-CO-O-, $CHR_1$O-CO-CH=CH-, -CH=CH-CO-O-$CHR_1$, -$CHR_1$-CO-O-CH=CH-, - CH=CH-O-CO-$CHR_1$-, -CO-S-, -S-OC-, -$CH_2$-$CH_2$-O-O-, -O-OC-$CH_2$-$CH_2$-, -C=C-C=C-, -$CR_1=CR_1$-$CR_1$=CR-,

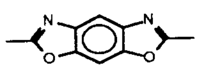 , 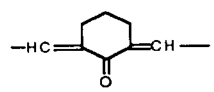

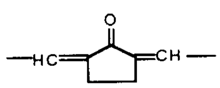 , 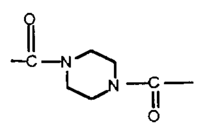

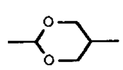 , 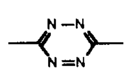 , 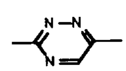

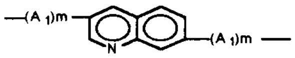 , 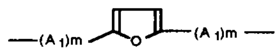 ,

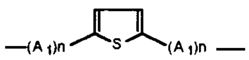 , 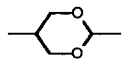 ,

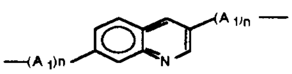 , 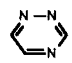 ,

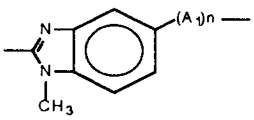 , 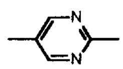

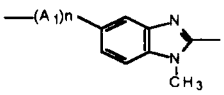 , 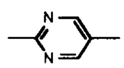 ,

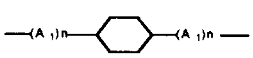 , 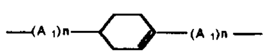 ,

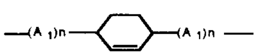 , 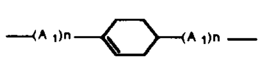 ,

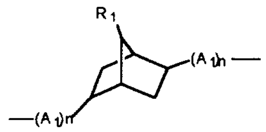 , 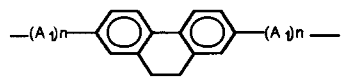 ,

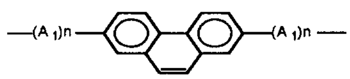 , 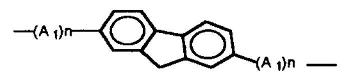 ,

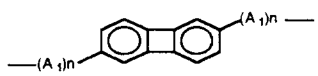

.

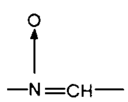 , 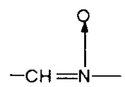 , 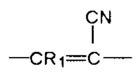 , 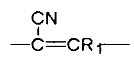 ,

or 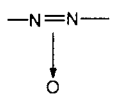

wherein each $A_1$ is independently a

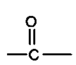 , 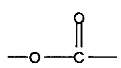 , 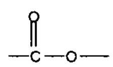 , 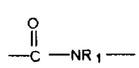 , or 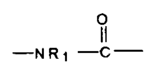

group ; each $R_1$ is independently hydrogen or a hydrocarbyl group having 1-3 carbon atoms. The aromatic rings can also contain one or more heteroatoms selected from the group consisting of N, O, S, and the like.

The term hydrocarbyl as employed herein means any aliphatic, cycloaliphatic, aromatic, arylsubstituted aliphatic or cycloaliphatic substituted aromatic groups.

In preferred embodiments of the present invention, the liquid crystalline main chain epoxy resin is formed from a prepolymer material having the formula:

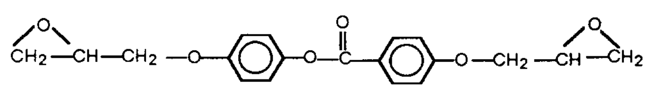

p-(2,3 epoxypropyl) phenoxy hydroxy benzoxy (DIFHB)

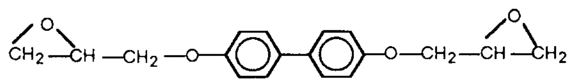

p-(2,3 epoxypropyl) oxybiphenyl (DIF)

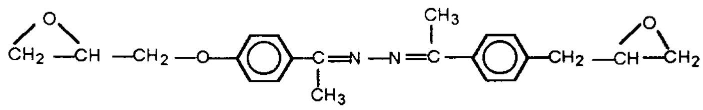

p-(2,3 epoxypropyl) acetophenone azine (EF3)

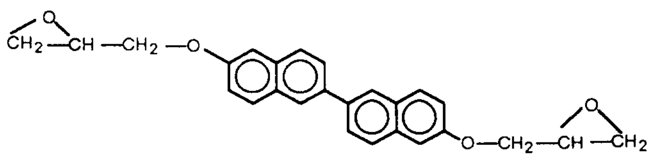

p-(2,3 epoxypropyl) binaphthalene (BIN)

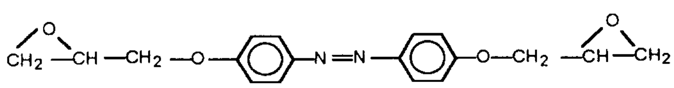

p-(2,3 epoxypropyl) schiff base (N)

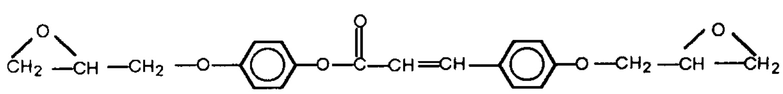

p-(2,3 epoxypropyl) chalcone (CHALC)

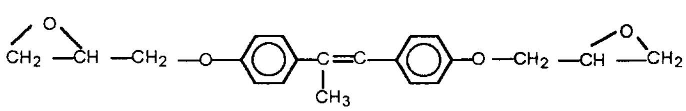

p-(2,3 epoxypropyl) alpha methyl stilbestrol (DOMS)

The liquid crystalline main chain epoxy resin may be formed in the presence of a curing agent having the formula:

Z-N-Z

wherein Z is an amine group, acid group, or anhydride group, and wherein N is a group containing two or more aromatic rings bridged by a rigid central linkage group. Typical rigid central linkage groups for bridging the aromatic rings include for example, a direct bond, or a - $CR_1$=$CR_1$-, -C=C-, -N=N-, $CR_1$=N, -$CR_1$=N-N=$CR_1$-, -$CR_1$=$CR_1$-CO-, -O-CO-$NR_1$-CO-, -N=$CR_1$-, -CO-O-CO-NR $_1$, -CO-$CR_1$=$CR_1$-, - CO-O-N=$CR_1$, CR $_1$=N-O-OC-, -CO-$NR_1$-$NR_1$-OC-, -CH =CH-O-OC-,-CO-O-CH=CH-, -O-OC-CH=CH-, -CH=CH-CO-O-, $CHR_1$O-CO-CH=CH-, -CH=CH-CO-O-$CHR_1$ , -$CHR_1$-CO-O-

CH=CH-, - CH=CH-O-CO-CHR$_1$- , -CO-S- , -S-OC- , -CH$_2$-CH$_2$-O-OC-, -CH$_2$-CH$_2$-O-O-, -O-OC-CH$_2$-CH$_2$-, -C=C-C=C-, -CR$_1$=CR$_1$-CR$_1$=CR-,

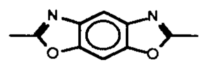 , 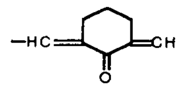 ,

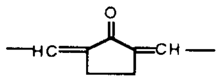 , 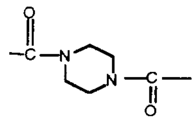 ,

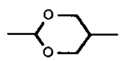 , 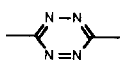 , 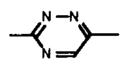

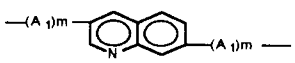 , 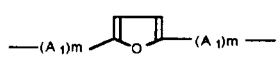 ,

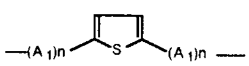 , 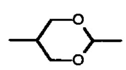 ,

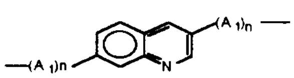 , 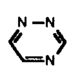 .

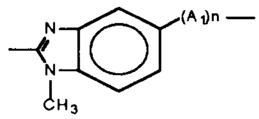 ,

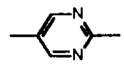

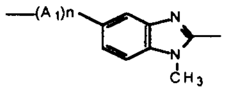 ,

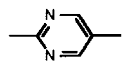 ,

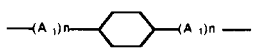 ,

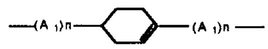 ,

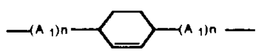 ,

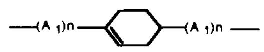 ,

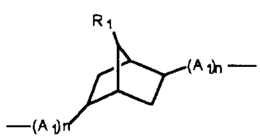 ,

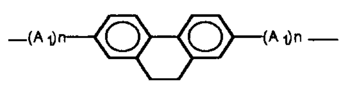 ,

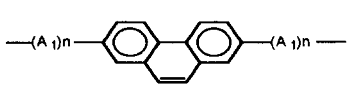 ,

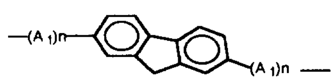 ,

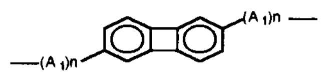

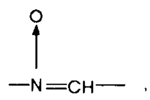, 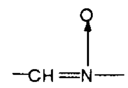, 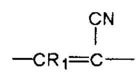, 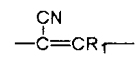,

or 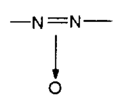

wherein each $A_1$ is independently a

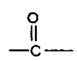, 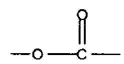, 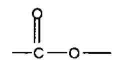, 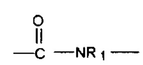, or 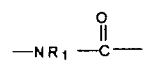

group ; each $R_1$ is independently hydrogen or a hydrocarbyl group having 1-3 carbon atoms. The aromatic rings can also contain one or more heteroatoms selected from the group consisting of N, O, S, and the like.
The term hydrocarbyl as employed herein means any aliphatic, cycloaliphatic, aromatic, arylsubstituted aliphatic or cycloaliphatic substituted aromatic groups.

In preferred embodiments of the present invention, the liquid crystalline main chain epoxy resin is formed in the presence of a curing agent having the formula:

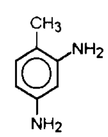

or

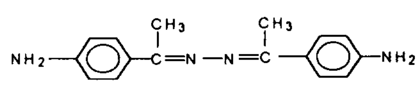

The polymer continuous phase of the polymer dispersed liquid crystal composite of the present invention may be either isotropic or anisotropic with respect to the transmission of light.

The invention further relates to a method of making a polymer dispersed liquid crystal composite. The method involves the step of preparing a mixture containing (a) a liquid crystalline epoxy resin prepolymer containing a rigid rodlike moiety, (b) a low molecular weight liquid crystal material, and (c) a curing agent, wherein (a), (b), and (c) are miscible. The method further involves the step of curing the mixture to form a polymer continuous phase and a liquid crystal discontinuous phase
wherein the liquid crystalline epoxy prepolymer containing the rigid rodlike moiety is a main chain component of the polymer continuous phase.

## BRIEF DESCRIPTION OF THE FIGURES

Figure 1 shows micrographs of a standard PDLC film and of a PDLC film containing a composite of the present invention.

Figure 2 shows a plot of the effect of temperature on relaxation time in standard PDLC film and PDLC film containing a composite of the present invention.

Figure 3 shows the effect of post curing on the angular dependence of light transmission in a standard PDLC film and a PDLC film containing a composite of the present invention.

Figure 4 shows the effect of the composite of the present invention on the angular dependence of light transmission in PDLC films.

Figure 5 shows the large angle index matching effect on the angular dependence of light transmission of the composites of the present invention.

Figure 6 shows a switching time spectrum of a PDLC film containing a composite of the present invention.

## DETAILED DESCRIPTION OF THE PREFERRED EMBODIMENT

The invention contemplates composites of a liquid crystal discontinuous phase in a polymer matrix continuous phase, where the polymer matrix continuous phase thereof contains as a compatible component of that phase a thermosettable liquid crystalline (mesogenic) main chain epoxy resin (LCER). The invention further contemplates that the LCER may comprise between 0 - 100% of the thermosettable epoxy resin in the polymer continuous phase. Where the LCER does not comprise 100% of the polymer discontinuous phase, compatible non-mesogenic epoxy resins may be utilized.

In the practice of the invention, the thermoset polymer matrix continuous phase may be isotropic (displaying a single index of refraction for all directions of incident light) or anisotropic (different indices of refraction for different directions) with respect to the transmission of light. The matrix of the composite becomes anisotropic upon the appearance of a mesophase (liquid crystalline phase) in the thermoset. The appearance of a mesophase depends on the LCER used in the composite, the concentration of the LCER with respect to the total resin in the composite, the curing agent used, and the curing temperature. The case of an isotropic matrix and the case of an anisotropioc matrix, and the parameters which influence whether a mesophase appears, are all illustrated in the examples that follow. As is shown in the examples below, the electrooptical and mechanical properties of the composites of the invention are improved by the presence of the LCER in the case of an isotropic matrix and in the case of an anisotropic matrix.

The composites of the present invention may be prepared in accordance with standard methods known in the art for making polymer dispersed liquid crystal composites.

The preferred method of preparation is polymerization-induced phase separation (PIPS).

Under the PIPS method, the components of the mixture -- the epoxy resin, curing agent, and liquid crystal material -- are mixed thoroughly. Thorough mixing is important for uniform results. The mix is then degassed, such as by centrifugation. This usually takes several minutes.

To prepare, for example, a shutter device containing the composite of the present invention, conducting glass substrates are used. Glass or polystyrene spacers are used to control film thickness. For example, a microspacer of 10 microns may be used. The spacers are sprinkled over one substrate prior to pouring onto it the polymer dispersed liquid crystal formulation. The electrooptical cells are drop filled with an excess of the polymer dispersed liquid crystal formulation being poured on the glass substrate and a second glass substrate is added, pressing until it contacts the spacers. For small shutters (1 $in^2$), manual pressing may be used to place the top substrate. Contact of the glass spacers can be easily felt. A vacuum press should be used for larger polymer dispersed liquid crystal films. In each instance, the samples are cured with no external pressure. The polymer dispersed liquid crystal shutter is cured in a convection oven set to the appropriate temperature. For example, the polymer dispersed liquid crystal shutter is placed on a thick (˜1/4 inch) aluminum sheet covered with aluminum foil. Adhesive tape is used to hold the shutters in position during cure. The droplet size of the polymer dispersed liquid crystals depends on the cure temperature. Generally, cure temperatures of approximately 90-120°C are used.

It is important that the samples be left in long enough for droplet formation and growth and polymer gelation. A curing time of 30-60 minutes is typical. In general, the samples cannot be over-cured.

The samples may additionally be post-cured. Post-curing is the practice of a second curing step in ovens under similar conditions to the original cure, but typically for a longer period of time. As illustrated in the examples that follow, post-curing can improve the performance of PDLC composites with respect to certain properties.

Once the polymer dispersed liquid crystal has cured, the samples are cleaned. Excess material is removed with a razor blade and the surfaces can be cleaned with cloth and acetone.

As described above, the invention involves the inclusion of an LCER in the polymer continuous phase matrix of a polymer dispersed liquid crystal composite. The LCER may comprise 100% of the epoxy resin utilized to make the composite or the LCER may be used in conjunction with other, non-mesogenic epoxy resins.

In the composites of the present invention, the polymer continuous phase matrix may be either isotropic or anisotropic with respect to the transmission of light. Whether the polymer matrix is isotropic or anisotropic depends on the concentration of the LCER in the matrix and on other conditions such as cure temperature, and the curing agent used. When the LCER content is lower than a critical concentration, as is illustrated in the examples that follow, the matrix is always isotropic.

The invention contemplates the substitution of LCERs for conventional isotropic epoxy resins in polymer dispersed liquid crystal composites, as well as the substitution of a specially selected curing agent in conjunction with the LCER in certain embodiments. The special curing agent is selected to produce an ordered thermoset and to promote the appearance of a mesophase in the matrix where the LCER is present above a critical concentration, as illustrated in the examples below.

To illustrate the invention, which is based on the substitution of LCERs and curing agents for conventional isotropic epoxy resins and curing agents in conventional polymer dispersed liquid crystal composites, the following description of a conventional polymer dispersed liquid crystal (PDLC) epoxy-based thermoset composite formulation is provided.

The epoxy prepolymer material in such a conventional preparation may be any suitable epoxy resin known in the art, ( See for example "Epoxy Resins and Composites" Volume I, Ed. By K. Dusek, Springer Verlag (1985) but for illustrative purposes, the non-mesogenic epoxy resin may be a mixture of EPON, available from Shell and HELOXY, where EPON comprises 9% and HELOXY 17% of the total mixture by weight.

The curing agent in the illustrative conventional formulation may be any suitable curing agent known in the art to produce a desirably cross-linked thermoset in conjunction with the epoxy resins used in the formulation ( See for example "Epoxy Resins and Composites", Vol. 1, Ed. by K. Dusek, Springer Verlag 1985 ) , but for illustrative purposes, the curing agent may be CAPCURE, available from Henkel, where CAPCURE comprises 34% of the total mixture by weight.

The liquid crystal material used in the illustrative polymer-dispersed liquid crystal formulation may be any nematic or operationally nematic low molecular weight liquid crystal material known in the art which will form microdroplets upon cure. The liquid crystal material preferably comprises cyanobiphenyls. For illustrative purposes, the conventional polymer dispersed liquid crystal formulation contains as liquid crystal TNO623, a nematic mixture available from Hoffmann-LaRoche as 40% of the total mixture by weight.

The illustrative conventional polymer dispersed liquid crystal composite may be prepared using the PIPS method and a film prepared between conducting glass substrates as described above.

In preferred embodiments of the present invention, the LCER which is substituted for the non-mesogenic epoxy resin may be any epoxy resin which is obtained by endcapping a mesogenic or rigid-rod-like molecule with reactive epoxy groups to produce LCERs.

The end-capping of mesogenic or rigid-rod-like molecules can be effected by methods known in the art. See Sadafule et al, J. Macromol. Sci. Chem. A 25, 121 (1988) and C. Carfagna et al , Macromol. Chem. Phys. 195, 279 (1994).

The resultant LCERs may then be utilized to make polymer dispersed liquid crystal composites according to the conventional PIPS method described above.

LCERs suitable for use in the composites of the invention are compounds having the formula:

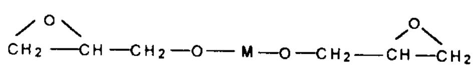

wherein M is a group containing two or more aromatic rings bridged by a rigid central linkage group. Typical rigid central linkage groups for bridging the aromatic rings include for example, a direct bond, or a - $CR_1$=$CR_1$-, -C=C-, -N=N-, $CR_1$=N, -$CR_1$=N-N=$CR_1$-, -$CR_1$=$CR_1$-CO-, -O-CO-$NR_1$-CO-, -N=$CR_1$-, -CO-O-CO-$NR_1$, -CO-$CR_1$=$CR_1$-, - CO-O-N=$CR_1$, CR $_1$=N-O-OC-, -CO-$NR_1$-$NR_1$-OC-, -CH =CH-O-OC-,-CO-O-CH=CH-, -O-OC-CH=CH-, -CH=CH-CO-O-, $CHR_1$O-CO-CH=CH-, -CH=CH-CO-O-$CHR_1$, -$CHR_1$-CO-O-CH=CH-, - CH=CH-O-CO-$CHR_1$-, -CO-S-, -S-OC-, -$CH_2$-$CH_2$-O-O-, -O-OC-$CH_2$-$CH_2$-, -C=C-C=C-, -$CR_1$=$CR_1$-$CR_1$=CR-,

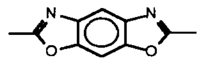 , 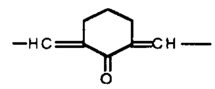 ,

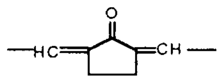 , 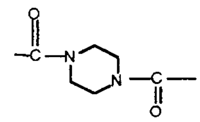 ,

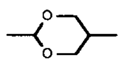 , 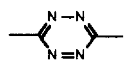 , 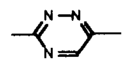

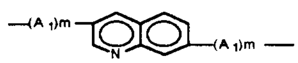 , 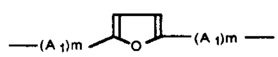 ,

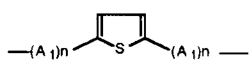 , 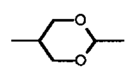 ,

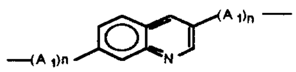 ,

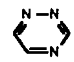 ,

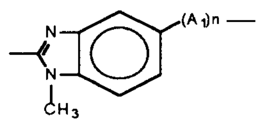 ,

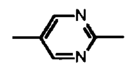

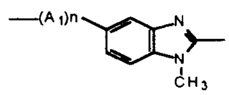 ,

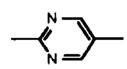 ,

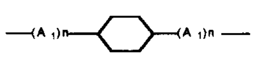 ,

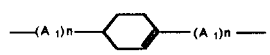 ,

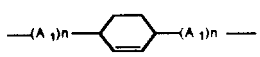 ,

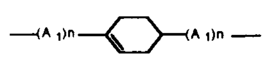 ,

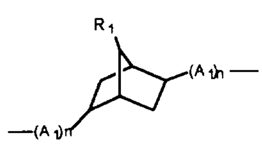 ,

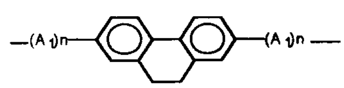 ,

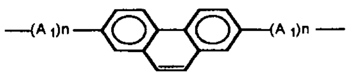,
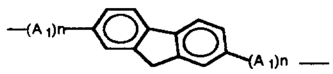,

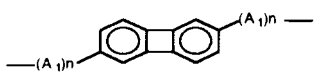

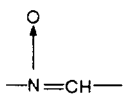, 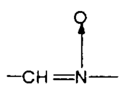, 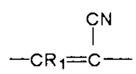, 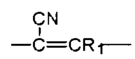,

or 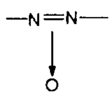

wherein each $A_1$ is independently a

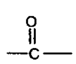, 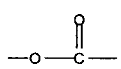, 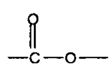, 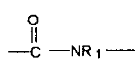, or 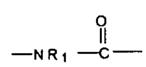

group ; each $R_1$ is independently hydrogen or a hydrocarbyl group having 1-3 carbon atoms. The aromatic rings can also contain one or more heteroatoms selected from the group consisting of N, O, S, and the like.
The term hydrocarbyl as employed herein means any aliphatic, cycloaliphatic, aromatic, arylsubstituted aliphatic or cycloaliphatic substituted aromatic groups.

Preferably, the LCERS are:

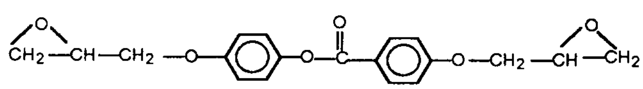

p-(2,3 epoxypropyl) phenoxy hydroxy benzoxy (DIFHB)

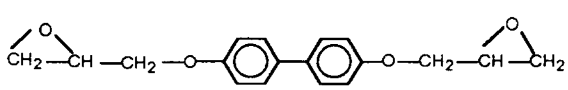

p-(2,3 epoxypropyl) oxybiphenyl (DIF)

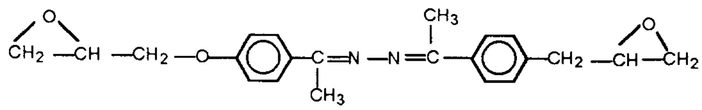

p-(2,3 epoxypropyl) acetophenone azine (EF3)

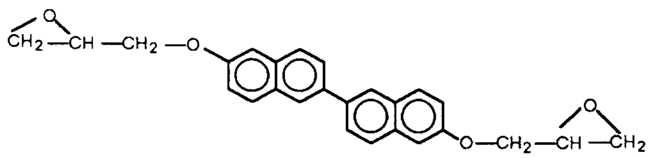

p-(2,3 epoxypropyl) binaphthalene (BIN)

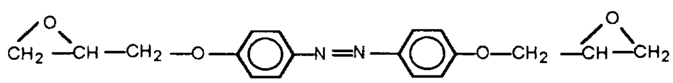

p-(2,3 epoxypropyl) schiff base (N)

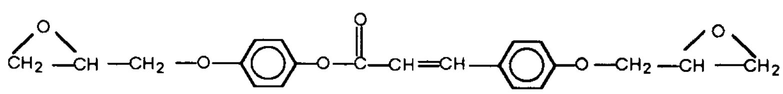

p-(2,3 epoxypropyl) chalcone (CHALC)

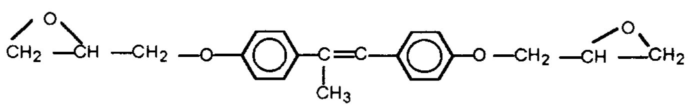

p-(2,3 epoxypropyl) alpha methyl stilbestrol (DOMS)

In embodiments of the invention where a special curing agent is selected for the composite in conjunction with the LCER, such curing agent may be a compound having the formula:

Z-N-Z

where Z is an amine group, acid group, or anhydride group, and wherein N is a group containing two or more aromatic rings bridged by a rigid central linkage group. Typical rigid central linkage groups for bridging the aromatic rings include for example, a direct bond, or a - $CR_1=CR_1$-, -C=C-, -N=N-, $CR_1$=N, -$CR_1$=N-N=$CR_1$-, -$CR_1=CR_1$-CO-, -O-CO-$NR_1$-CO-, -N=$CR_1$-, -CO-O-CO-$NR_1$, -CO-$CR_1=CR_1$-, - CO-O-N=$CR_1$, CR $_1$=N-O-OC-, -CO-$NR_1$-$NR_1$-OC-, -CH =CH-O-OC-,-CO-O-CH=CH-, -O-OC-CH=CH-, -CH=CH-CO-O-, $CHR_1$O-CO-CH=CH-, -CH=CH-CO-O-$CHR_1$, -$CHR_1$-CO-O-CH=CH-, - CH=CH-O-CO-$CHR_1$-, -CO-S-, -S-OC-, -$CH_2$-$CH_2$-O-OC-, -$CH_2$-$CH_2$-O-O-, -O-OC-$CH_2$-$CH_2$-, -C=C-C=C-, -$CR_1=CR_1$-$CR_1$=CR-,

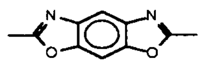 , 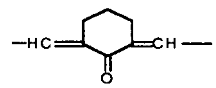

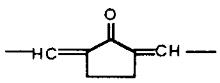 , 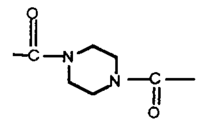 ,

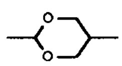 , 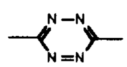 , 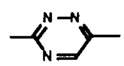

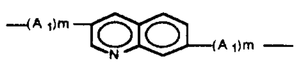 , 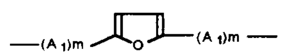 ,

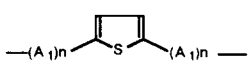 , 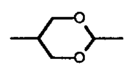 ,

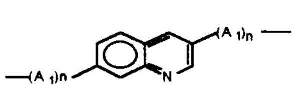 , 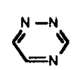 ,

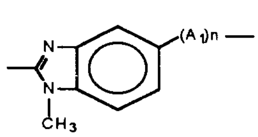 , 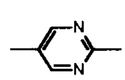

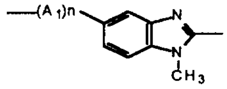 , 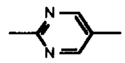 ,

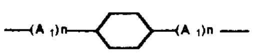 , 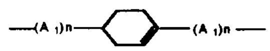 ,

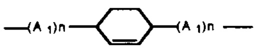 , 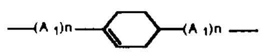 ,

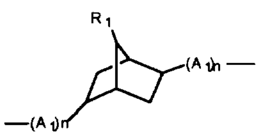 , 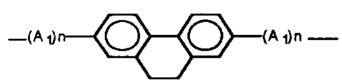 ,

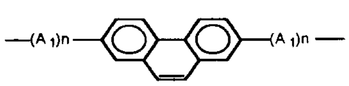 , 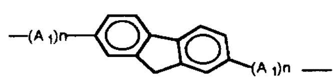 ,

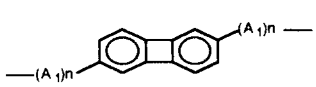

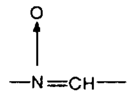, 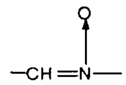, 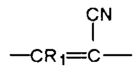, 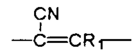,

or 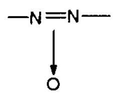

wherein each $A_1$ is independently a

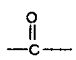, 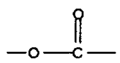, 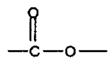, 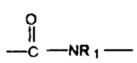, or 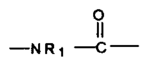

group ; each $R_1$ is independently hydrogen or a hydrocarbyl group having 1-3 carbon atoms. The aromatic rings can also contain one or more heteroatoms selected from the group consisting of N, O, S, and the like.
The term hydrocarbyl as employed herein means any aliphatic, cycloaliphatic, aromatic, arylsubstituted aliphatic or cycloaliphatic substituted aromatic groups.

In preferred embodiments the curing agent selected in conjunction with the LCER is either

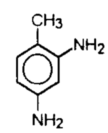

or

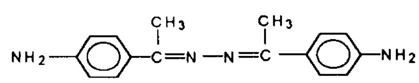

The purpose of these specially selected curing agents is to promote the formation of a mesophase where the LCER is present above a critical concentration. In the case of the azine derivative, it is due due to its rigid rod structure, while in the case of the diaminotoluene derivative it is due to higher reactivity at lower temperature.

The invention further contemplates an electrooptical device containing a composite of the present invention. The devices of the invention encompass a thermally, electrically, magnetically and/or electromagnetically addressable liquid crystal optical/display cell. For example, in the case of an liquid crystal electrooptical cell, it has a volume of the liquid crystal-polymeric composite of the invention between two closely spaced electrodes in which the liquid crystal discontinuous phase is responsive to an applied voltage between the electrodes, such that light transmittance through the liquid crystal material is selectable depending upon the resulting electric field strength, current flow, or change passed through the cell. The cells typically contain sealant layers, support layers of transparent, electrically conductive film having sufficient supporting strength to maintain the structural integrity of the cell; polarizer elements when desirable; and associated adhesives, and the like.

The electrooptical liquid crystal cells can be conveniently fabricated by a variety of techniques known in the art. The present invention is particularly well suited for the preparation of large pieces of the composite material, from which smaller pieces can be later cut and used in fabricating a cell. For example, the cell can consist of two transparent plastic sheet electrodes made conductive by means of an Indium- tin oxide (ITO) coating, separated by a melt of solution-formed microdispersion of liquid crystal composite-forming material, the preparation of which is described by P.S. Drzaie, "Polymer Dispersed Nematic Liquid Crystal For Large Area Displays and Light Valves", J. Appl. Phys. 60(6)

Sept. 15, 1986. Alternately, one electrode of the electrooptical liquid crystal cells can result from a conductive coating, such as tin oxide, applied to a glass pane. This conducting glass pane can be a conductive plastic sheet to complete the cell.

The device of the invention with LCERs in the polymer continuous phase will contain a microdispersion of material, typically in the shape of liquid crystal microdroplets, will either scatter or transmit incident light depending on the relationship among the indices of refraction and dependent upon the microdroplets being of a size to scatter incident light, e.g., on the order of 0.1 to 10 microns. In the absence of an applied filed, the optic axes of the microdroplets have no preferred direction, and the incident light encounters a mismatch between the indices of refraction of the matrix and of the microdroplets. This results in light being scattered and the device appears opaque. With application of an electric field across the sheet of liquid crystalline-polymeric composite material, the optic axes aligns parallel to the field and normal to the surface of a sheet of the composite. Incident light detects no mismatch between the indices of refraction and is transmitted so that the device appears transparent.

The liquid crystal devices of the invention may or may not have an image memory. Images formed by contrasting opaque and clear areas are displayed on these devices by the constant application of a field to those areas desired to appear clear. Once the field is removed, the clear areas switch back to opaque in less than about 200 milliseconds, typically less than about 150 milliseconds and in a preferred embodiment, less than about 50 milliseconds. The liquid crystal-polymer composite of the invention can have optical memory in that light scattering devices that include the composite can be manipulated to display contrasting opaque and clear areas which are field independent. Memory is made possible by the selection of a liquid crystal which remains in the liquid crystalline state at temperatures above the softening temperature of the polymer. The liquid crystal is in the liquid crystalline state while the polymer is soft and as a result, the optic axes of the discontinuous phase microdroplets can be aligned by an external field. Maintaining the external field in the course of rehardening the polymer provides a composite in which the microdroplets exposed to the field remain aligned upon the field's removal. With an external field applied to the entire surface of the composite film during hardening of the resin results in a wholly transparent material; a patterned field as, for instance, an alphanumeric character, applied during hardening of the polymer will result in a material displaying a clear (transmitting) character in an opaque (scattering) field. The clear area or areas will remain so until the random alignment of the optic axes is restored by reheating the material and cooling it in the absence of a field.

In the examples to follow, all composites were prepared according to the PIPS method described above and PDLC films/shutters prepared between conducting glass substrates with microspacers of 10 microns as described above. The films were cured in ovens at 90-120°C and curing times were 30-60 minutes.

The electrooptical characteristics of the PDLC films were measured with a photometric system, and the transmittance-voltage, switching times and angular transmittance of the samples were measured as functions of time.

Symbols used in the examples are as follows:

$V_{10}$ = threshold voltage
$V_{90}$ = saturation voltage
$T_{off}$ = % transmittance in off-state
$T_{on}$ = % transmittance in on-state
$w_{off}$= decay time

In examples 1-10, LCERS (DOMS or DIF) were substituted for conventional isotropic resins (EPON and HELOXY) in the conventional formulation of EPON/HELOXY/CAPCURE/TNO623 and the matrix was isotropic.

In example 11, the LCER DIF and the curing agent NA2 were substituted for EPON and CAPCURE, and the matrix remained isotropic. In examples 12-14, an LCER was substituted for EPON/HELOXY where the ratio of LCER to total resin is above 50% and the matrix is anisotropic with respect to the transmission of light. In examples 15-18, an LCER and curing agent were substituted for EPON/HELOXY and CAPCURE in the conventional formulation, and where the percentage of LCERs was greater than 50%, the matrix was anisotropic.

The following examples are intended to illustrate the invention and not to limit it. The scope of the invention is limited only by the appended claims.

**Example 1**

Effect of LCERs on Decay Times

PDLC films were prepared by substituting DOMS resin for EPON in a standard PDLC formulation.

The standard formulation is:

EPON 9%, HELOXY 17%, CAPCURE 34%, LC (LIQUID CRYSTAL TNO623) 40%

The samples indicated as DOMS X% contain X% of DOMS with respect to EPON. The samples were prepared by mixing the components at a temperature of 70°C until an homogeneous solution was formed (after about 5 minutes). The solution was then pipetted in a uniform thickness of 10µm between two conductive substrates (indium tin oxide glass substrates) and allowed to cure for about 30 minutes at a temperature of 100°C.

The decay times of as made PDLC films were measured and compared with those made of the standard formulation, as shown in the table below. For some formulations, more than one sample was prepared to verify the reliability of results (i.e. DOMS 20% and DOMS 100%).

TABLE 1

| Formulation | $>_{OFF}$ (ms) |
|---|---|
| Standard | 90 |
| DOMS 20% | 57.4 |
| DOMS 20% | 59.8 |
| DOMS 40% | 53.3 |
| DOMS 60% | 45.4 |
| DOMS 80% | 44 |
| DOMS 100% | 23 |
| DOMS 100% | 28 |

The results indicate a reduction in the decay times by increasing LCERs content (the $>_{off}$ decreases from 90 ms of the standard to 23 ms of the sample containing 100% of DOMS).

**Example 2**

<u>Effect of LCERs on the Angular Dependence of Transmission (off-angle haze)</u>

The table below shows the angular ON-state transmittance for the samples of example 1.

TABLE 2

| Formulation | Ton(%) (0°) | Ton(%) (15°) | Ton(%) (30°) | Ton(%) (45°) | Ton(%) (60°) |
|---|---|---|---|---|---|
| Standard | 85 | 87.5 | 89.9 | 76.1 | 52.8 |
| DOMS 20% | 76.8 | 80.3 | 83.5 | 74.1 | 52.0 |
| DOMS 40% | 86 | 89.3 | 91.1 | 80.1 | 55.5 |
| DOMS 60% | 74.4 | 80.8 | 84.4 | 75.1 | 46.3 |
| DOMS 80% | 73.1 | 76.9 | 83.5 | 75.7 | 51.7 |
| DOMS 100% | 83.1 | 84.7 | 84.6 | 76.5 | 60.7 |

As can be seen from the table, the angular ON-state transmission of PDLC films containing DOMS is about unchanged with respect to standard. This effect, which is due to invariation of index matching, is significant because it shows that the transmission doesn't decrease in the presence of DOMS.

In some cases (DOMS 40% and DOMS 100%), the transmission at 60° increases with respect to standard, although the transmittance at 0° is unchanged. This phenomenon indicates an improvement in the angular reduction of PDLC films (Haze) containing LCERs.

**Example 3**

<u>Effect of Aging on the Voltages of LCER-Based PDLC Films</u>

The voltages ($V_{10}$ and $V_{90}$) of the LCER-based PDLC films of Example 1 were measured on the same day of sample preparation and were repeated about 9 months later.

The results are shown in the table below.

TABLE 3

| Formulation | $V_{10}$ (Volts) as made | $V_{90}$ (Volts) as made | $V_{10}$ (Volts) after 9 months | $V_{90}$ (Volts) after 9 months |
|---|---|---|---|---|
| Standard | 12 | 21 | 5 | 12 |
| DOMS 20% | 11 | 20 | 6 | 13 |
| DOMS 40% | 11 | 19 | 6 | 11 |
| DOMS 60% | 15 | 23 | 6 | 12 |
| DOMS 80% | 15 | 30 | 6 | 11 |
| DOMS 100% | 30 | 63 | 10 | 19 |

As can be seen from the table, all PDLC films have lower voltages after 9 months but, for standard film the voltage ($V_{90}$) decreases from 21V to 12V (about half). For the films containing DOMS, the decrease is more pronounced (for the film containing 100% DOMS the voltage decreases from 63V to 19V).

This phenomenon indicates that natural aging is much more effective in the reduction of voltages for PDLC films containing LCERs. As shown in example 4, the opacity of the film containing 100% DOMS is better, after aging, with respect to standard.

**Example 4**

Effect of Aging on Opacity

The OFF-state transmittance (opacity) of PDLC films of example 1 was measured on the same day of samples preparation and after about 9 months. The results are shown in the table below:

TABLE 4

| Formulation | Toff (as made) | Toff (after 9 months) |
|---|---|---|
| Standard | 0.72 | 3.29 |
| DOMS 20% | 1.17 | 5.14 |
| DOMS 40% | 1.20 | 3.52 |
| DOMS 60% | 0.94 | 2.5 |
| DOMS 80% | 2.56 | 5.38 |
| DOMS 100% | 0.42 | 0.77 |

As can be seen from the table, all PDLC films show an increase in Toff after 9 months but the increase is less pronounced with increasing LCERs content.

For the film containing 100% of DOMS, the opacity (Toff) is about unchanged. This film has a Toff of 0.77 after 9 months, while the standard film has a Toff of 3.29. Because the higher the Toff the lower the opacity of the film, one can conclude that film containing 100% DOMS has a higher opacity and, consequently, higher optical performances with respect to the standard.

As is known, the opacity of PDLC films is related to the morphology of the liquid-crystal microdroplets embedded in the film. The opacity is higher when the microdroplets diameter is about 1 µm and the droplets density is high.

In Figure 1, the micrographs of standard PDLC film and of DOMS 100% film after natural aging are shown.

The micrographs show that the PDLC film containing DOMS possesses lower droplet diameters (1-1.5µm) and higher droplets density with respect to the standard film (diameter=2-3 µm). Both factors reduce transmittance in the OFF state.

**Example 5**

Effect of Temperature on the Switching Times

PDLC films were prepared as described in example 1. Figure 2 shows a plot of the effect of temperature on relaxation time ($>_{off}$) in three PDLC films with 0%, 40% and 100% of DOMS.

The results indicate that, although the decreasing trends of $>_{off}$ with temperature are similar for all, above 40° range the $>_{off}$ of the sample with 100% DOMS reduces to less than 10 ms.

This result is important for display applications of PDLC, where low response times are required, and can be obtained by temperature variation.

**Example 6**

Effect of Post Curing on the Angular Dependence of Light Transmission (off-angle haze)

PDLC films were prepared as described in example 1. The films were post-cured in a ovens at 80°C for 24 hours. The angular-dependence of ON-state transmittance was measured before and after post curing. Indicating as $T_{on}$ the transmittance of PDLC films before post curing and as T* on the transmittance after post curing, Figure 3 shows the $T_{on}$-T* on values as function of angle.

The results indicate an improvement of angular transmission in the LCERs-based film after post-curing (T* on increases and, consequently, Ton-T* on value is lower than standard film).

**Example 7**

Reproducibility of Measurements

PDLC films were prepared as described in Example 1. Four samples were prepared and measured for each formulation to verify the reliability of measurements. The results, reported in the table below, indicate that it is possible to reproduce the results obtained by measuring the electrooptical properties of PDLC films.

TABLE 5

| Sample | DOMS (%) | $V_{10}$ (Volts) | $V_{90}$ (Volts) | Op (%) | Ton (%) | $>_{off}$ (ms) |
|---|---|---|---|---|---|---|
| R298_4 | 0 | 12 | 21 | 0.72 | 89.6 | 90 |
| R298_1 | " | 16 | 29 | 0.13 | 82.3 | 47.9 |
| R298_2 | " | 12 | 21 | 0.76 | 85 | 65.4 |
| | | | | | | |
| R297_1 | 20 | 11 | 20 | 1.76 | 80.8 | 59.8 |
| R297_2 | " | 11 | 18 | 1.97 | 83.9 | 59.5 |
| R297_2 | " | 11 | 20 | 1.17 | 76.8 | 57.4 |
| R297_4 | " | 10 | 16 | 1.98 | 83.4 | 66 |
| | | | | | | |
| R295_1 | 40 | 11 | 19 | 1.20 | 86.8 | 53.3 |
| R295_2 | " | 13 | 20 | 0.55 | 90.2 | 41.8 |
| R295_3 | " | 11 | 19 | 0.63 | 80.2 | 76 |
| R295_4 | " | 14 | 22 | 0.45 | 73.7 | 38.7 |
| | | | | | | |
| R296_1 | 60 | 13 | 20 | 1.55 | 85 | 49.5 |
| R296_2 | " | 14 | 22 | 1.02 | 84.8 | 47.4 |
| R296_3 | " | 15 | 23 | 0.94 | 85.7 | 45.4 |
| R296_4 | " | 16 | 24 | 0.76 | 83.1 | 45.4 |
| | | | | | | |
| R302_1 | 80 | 15 | 30 | 2.56 | 76.3 | 44 |
| R302_2 | " | 14 | 22 | 1.02 | 84.8 | 47.4 |
| R302_3 | " | 18 | 37 | 2.35 | 73.1 | 57.4 |
| R302_4 | " | 16 | 33 | 3.01 | 74.5 | 58.7 |
| | | | | | | |
| R304_1 | 100 | 30 | 63 | 0.42 | 76.2 | 22.7 |
| R304_2 | " | 27 | 51 | 0.48 | 71.4 | 28 |
| R304_3 | " | 28 | 66 | 1.33 | 83.6 | 32 |
| R304_4 | " | 31 | 68 | 1.18 | 83.1 | 28 |

**Example 8**

Effect of LCERs on the Nematic-Isotropic Transition Temperatures

PDLC films were prepared as described in Example 1.

Nematic-Isotropic transition temperatures (Tni) were measured by using a hot stage polarized-light microscope (Leitz-Mettler FP5) and compared with those of the standard formulation.

The samples were positioned on the hot stage of the microscope and their behavior was studied, as function of temperature, through the polarized-light.

The measurements were carried out on the same day of the sample preparation and they were repeated about 8 months later. The results, shown in the table below, indicate that, while in the as made PDLC there is an increase of

about 3°C in the Tni with increasing LCERs content, after 8 months there is no difference in the Tni of the samples described above. One can conclude that the LCERs content doesn't influence the transition temperatures of PDLC films with respect to the standard formulation. This is important because, usually, the transition temperatures of PDLC films are lower in the presence of additives.

TABLE 6

| Sample | Tni (°C) 1/10/94 | Tni (°C) 17/6/94 |
|---|---|---|
| Standard | 95.2 | 102.4 |
| DOMS 20% | 93.8 | 102.1 |
| DOMS 40% | 94.8 | 102.0 |
| DOMS 60% | 95.1 | 102.1 |
| DOMS 80% | 97.3 | 102.8 |
| DOMS 100% | 98 | 102.6 |

**Example 9**

<u>Effect of LCERs on Switching Voltages and Decay Times</u>

PDLC films were prepared by substituting DIF LCER for EPON in standard PDLC formulation.

The formulation indicated as DIF x% contains x% of DIF with respect to EPON. The mixture was mixed at a temperature of 100°C and, after about 5 minutes, was pipetted, in a uniform thickness of 10µm, between two conductive glasses and allowed to cure at a temperature of 120°C for about 1 hour.

The electrooptical properties of the resulting PDLC films were measured and compared with those of standard formulation:

TABLE 7

| Formulation | $V_{10}$ (Volts) | $V_{90}$ (Volts) | $T_{off}$ (%) | $>_{OFF}$ (ms) |
|---|---|---|---|---|
| Standard | 12 | 25 | 0.25 | 60 |
| DIF 50% | 12 | 20 | 0.64 | 32 |
| DIF 100% | 11 | 19 | 0.20 | 34 |

The results indicate a reduction of switching voltages and decay times for PDLC films containing LCERs.

The $V_{90}$ voltage reduces from 25V of the standard film to 19V of the film containing 100% DIF.

The decay time decreases from 60 ms of the standard film to about 30 ms of the films containing DIF.

The opacity of PDLC films ($T_{off}$) is about unchanged.

**Example 10**

<u>Effect of LCERs on the Angular Transmission (off-angle haze)</u>

The angular dependence of transmittance of the PDLC films of Example 9 was studied and compared with those of standard PDLC film.

The results, shown below, indicate that PDLC films containing LCERs have an angular transmittance at 60° greater than 50%, while the standard film has a transmittance of about 30% at the 60° angle.

This result indicates an improvement in the ON-state angular transmittance of PDLC films containing LCERs.

TABLE 8

| Formulation | Ton(%) (0°) | Ton(%) (15°) | Ton(%) (30°) | Ton(%) (45°) | Ton(%) (60°) |
|---|---|---|---|---|---|
| Standard | 86.4 | 88.3 | 89.1 | 75.4 | 30.9 |
| DIF 50% | 89.2 | 89.6 | 87.8 | 80.0 | 62.2 |
| DIF 100% | 83.9 | 85.1 | 85.0 | 73.6 | 55.9 |

**Example 11**

Effect of LCERs on the Angular Transmission (off-angle haze)

PDLC films were prepared by substituting DIF/NA2 mixtures for EPON/CAPCURE in the standard PDLC formulation

The percentage of DIF is referred to EPON weight in standard formulation, the NA2 content is in the ratio: DIF / NA2 = 5.7 / 1.

With this formulation two films of PDLC were prepared (%DIF=50, %DIF=80) by mixing the components at a temperature of 100°C, pipetting the solution between two conducting glasses with a thickness of 10μm and curing the resulting solution at a temperature of 120°C.

The angular dependence of ON-state transmittance was studied and compared with a standard PDLC film.

The results show an improvement in the angular transmittance for PDLC films containing LCERs (at 60° the transmittance of the sample with 80% DIF is 63.7, while transmittance at 60° for the standard film is 34.1%).

TABLE 9

| Formulation | Ton(%) (0°) | Ton(%) (15°) | Ton(%) (30°) | Ton(%) (45°) | Ton(%) (60°) |
|---|---|---|---|---|---|
| Standard | 88.7 | 89.9 | 89.2 | 75.3 | 34.1 |
| DIF 50%+NA2 | 94.7 | 95.3 | 93.4 | 83.7 | 42.5 |
| DIF 80%+NA2 | 81.0 | 81.9 | 81.4 | 76.3 | 63.7 |

**Example 12**

Effect of LCERs on Decay Times

PDLC films were prepared by substituting DIF resin for EPON + HELOXY resins in standard PDLC formulation.

The formulations studied are as follows:

Standard = EPON 9% + HELOXY 17% + CAPCURE 34% + LC 40%

DIF 13.2% = DIF 13.2% + HELOXY 12.8% + CAPCURE 34% + LC 40%

DIF 17.5% = DIF 17.5% + HELOXY 8.5% + CAPCURE 34% + LC 40%

The films were prepared by mixing the components at a temperature of 110°C for about one minute and curing the "sandwiched" samples at a temperature of 120°C for about 30 minutes.

In the sample indicated as DIF 13.2% the DIF percentage, with respect to total resin (DIF+HELOXY), is 52% and in the sample DIF 17.5% that percentage is 67%. In both cases the LCER content is greater than 50% with respect to total resin and the matrix shows anisotropic properties.

In fact, the optical microscopy analysis performed on both films showed that, at a temperature higher than the isotropization temperature of the LC, the film still remain opaque up to degradation of the sample. The morphology of the matrix is however not homogeneous, in fact it contains some amounts of uncured DIF, that melts at its melting temperature.

The decay times were measured and compared with those of the standard formulation, as shown in the table below:

TABLE 10

| Formulation | $>_{OFF}$ (ms) |
|---|---|
| Standard | 60 |
| DIF 52% | 12 |
| DIF 67% | ≈2ms |

The results indicate a reduction of decay times in PDLC films containing LCERs. In particular, PDLC film containing 67% of DIF with respect to total resin (Sample 2) shows a decay time of less than 5ms. This is important for LCD device applications, where switching times of less than 5 ms is an essential application requirement.

In the measurement of decay times of sample DIF 67%, the electrical pulse was not enough to totally switch the sample, so the real $>_{OFF}$ could be slightly different from the value obtained. Moreover, a big difference on the $>_{OFF}$ value (the expected range is 2-5ms) would not be expected because usually the pulse voltage does not have a big influence on decay times (if the sample is near saturation, as in this case) and because the value obtained is in accordance with the decreasing trends of $>_{OFF}$ shown in the table above.

**Example 13**

<u>Effect of LCERs on the Angular Dependence of Light Transmission (off-angle haze)</u>

The ON-state angular transmittance of the PDLC films of Example 12 was studied and compared with those of a standard PDLC film. The results are shown in the table below:

TABLE 11

| Formulation | Ton(%) (0°) | Ton(%) (15°) | Ton(%) (30°) | Ton(%) (45°) | Ton(%) (60°) |
|---|---|---|---|---|---|
| Standard | 86.4 | 88.3 | 89.1 | 75.4 | 30.9 |
| DIF 52% | 74.5 | 75.4 | 73.8 | 65.8 | 51.4 |
| DIF 67% | 53.3 | 53.2 | 53.2 | 49.5 | 39.6 |

The results indicate that when the LCER content in PDLC formulation is greater than 50% respect to total resin, the ON-state transmittance at 0° is lower than those of standard PDLC film. This is due to anisotropic properties of the matrix that cause scattering of light in the ON state.

On the other hand, the results indicate an improvement in the angular dependence of transmittance (Haze) for PDLC films containing LCERs. This is shown in Figure 4 where the maximum transmittance (Tmax) of each PDLC film was considered equal to 100% and the values of transmittance at different angles were obtained by the formulas:

$$T^{*}\ on\ (,^{\circ}) = \frac{Ton(,^{\circ})}{Tmax}\ .\ 100$$

This improvement in angular transmittance for PDLC films containing LCERs, with respect to a film with isotropic matrix, is due to better index matching between a birefringent liquid crystal droplet and a birefringent matrix (both refractive indices can be matched).

The angular transmittance in ON state for PDLC with anisotropic matrix can be increased by aligning the matrix, during curing, with an electrical or magnetical field or by surface treatment of conductive substrate.

**Example 14**

Effect of LCERs on the Electrical Properties of PDLC Films

PDLC films were prepared as described in Example 12.

Electrical properties of films containing LCERs were measured by using a LCR meter (HP 4284A) and compared with those of standard formulation. The results, shown in table below, indicate that the resistivity of PDLC films containing LCERs increases (from 58M+ • m of the standard formulation to 105 M+ • m when the LCERs content is 67% with respect to total resin). This result is very important for large area PDLC films, because, as is known, the higher the resistivity of the film, the lower the electrical power loss.

TABLE 12

| Formulation | Resistivity (M+ • m) |
|---|---|
| Standard | 58 |
| DIF 52% | 67.5 |
| DIF 67% | 105 |

**Example 15**

Effect of LCERs on the Angular Dependence of Light Transmission (off-angle haze)

PDLC films were prepared by substitution of DOMS/DAT or DIF/DAT mixtures for EPON/CAPCURE/HELOXY in the standard PDLC formulation.

The PDLC matrix having more than 50% LCERs (DOMS or DIF) showed an anisotropic phase. The randomly oriented mesogenic phase of the PDLC matrices containing more than 50% of LCERs shows a lower ON-state transmission at orthogonal viewing direction. This effect is due to an index mismatching between the ordinary refractive index of liquid crystal droplets and the average refractive index of unoriented polymeric matrix. However, in certain cases the ON-state transmittance increases with increase in viewing angle.

An example of this large-angle index matching is shown in Figure 5 below, were the angular transmittance of a PDLC film with 60% of DOMS is compared with a standard film. Aside from the low transmittance level of the PDLC sample with 60% DOMS, which can be improved by curing the film in an electrical field, the result of this study is an improvement in the angular dependence of light transmission of PDLC films. This phenomenon is potentially interesting for development of "index matched controlled" PDLC films.

**Example 16**

Effect of LCERs on Decay Times

The decay times of PDLC films of the Example 15 were measured. The results indicate a reduction in the decay times of LCER based PDLC films.

For example, a PDLC film containing 90% of DOMS, according to the formulation described in the previous example, shows a decay time of 5ms. Similarly, a PDLC film containing 60% of DIF shows a decay time of 1.5ms.

The importance of this improvement in switching times is the potential application of LCER-based PDLC films in LCD devices, where times of less than 5ms are required.

A typical switching time spectrum of a mesogenic LCERs-based film is shown in the Figure 6 below for DOMS/EPON System. The Figure depicts the response time spectrum of a mesogenic PDLC film prepared with DOMS/EPON (60:40)/DAT/TNO623. The sample's decay time is: $>_{OFF}$ = 1.5ms.

**Example 17**

Thermal and Mechanical Properties of LCERs resins

An epoxy material (p,p' diglycidyloxybenzoxy) was cured at two different temperatures to obtain an opaque liquid-crystalline resin (LCERs) and a transparent isotropic resin.

Thermal and mechanical properties of both materials were measured.

The results, reported in the table below, indicate an increase in both thermal and mechanical properties of LCERs resin compared with isotropic resin.

TABLE 13

| Properties | Isotropic resin | LCERs |
|---|---|---|
| **Tg** (°C) glass transition temperature (DSC) | 158° | 197° |
| **Ts** (°C) softening point (TMA) | 164° | 203° |
| =**b** bending strength (MPa) | 91 | 112 |
| ©$_u$ ultimate elongation (%) DIN 53455 | 4.8 | 6.7 |
| **$K_I$** impact strength ($KJ/m^2$) DIN 53453 | 32 | 43 |

The higher values of Tg and of softening point Ts for the resin cured in the liquid crystalline state indicate a superior degree of curing with respect to the same resin cured in the isotropic state. Also, the mechanical properties are noticeably improved if the cross linking reaction is carried out in the mesophase. In particular, the toughness and fracture resistance are higher for the liquid crystalline epoxy resin.

**Example 18**

Thermal Properties of PDLC Films Containing LCERs

PDLC films were prepared by using the standard formulation and the formulation indicated as DIF 67% in Example 12. The usual procedure was used to prepare the samples.

Two other films were prepared by using the formulations above described without liquid crystal (LC).

The glass transition temperatures ($T_g$) of the films were measured by using a Differential Scanning Calorimeter (Perkin-Elmer DSC7, Scanning Rate 40°C/min). The results, reported in the table below, indicate that the films containing LCERs have a higher $T_g$ respect to films with isotropic resins (the $T_g$ of the PDLC film containing DIF is 8.43°C, while the $T_g$ of standard PDLC film is - 12.87°C).

As we can see from the table below, in all cases the presence of liquid crystal lowers the glass transition temperatures. But the level of plasticization for the cured resin due to the presence of LC inside, is lower for DIF with respect to standard resin.

TABLE 14

| Formulation | $T_g$/°C |
|---|---|
| Standard without LC | -0.17 |
| DIF 67% without LC | 8.43 |
| Standard | -12.87 |
| DIF 67% | 4.73 |

## Claims

**1.** A polymer dispersed liquid crystal composite containing a polymer continuous phase and a liquid crystal discontinuous phase characterized in that the polymer continuous phase contains a cross-linkable liquid crystalline main chain epoxy resin as a compatible component of that phase.

**2.** The polymer dispersed liquid crystal composite of claim 1 wherein the liquid crystalline main chain epoxy resin is formed from a prepolymer having the formula:

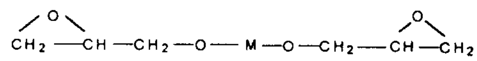

wherein M is a group containing two or more aromatic rings bridged by a rigid central linkage group and said central linkage group is selected from the group consisting of a direct bond, or a -CR$_1$=CR$_1$-, -C=C-, - N=N-, CR$_1$=N, -CR$_1$=N-N=CR$_1$-, -CR$_1$=CR$_1$-CO-, -O-CO-NR$_1$-CO-, -N=CR$_1$-, -CO-O-CO-NR $_1$, -CO-CR$_1$=CR$_1$-, -CO-O-N=CR$_1$, CR $_1$=N-O-OC-, -CO-NR$_1$-NR$_1$-OC-, -CH =CH-O-OC- ,-CO-O-CH=CH-, -O-OC-CH=CH-, -CH=CH-CO-O-, CHR$_1$O-CO-CH=CH-, -CH=CH-CO-O-CHR$_1$ , -CHR$_1$-CO-O-CH=CH-, -CH=CH-O-CO-CHR$_1$-, -CO-S-, -S-OC-, -CH$_2$-CH$_2$-O-O-, -O-OC-CH$_2$-CH$_2$-, - C=C-C=C-, -CR$_1$=CR$_1$-CR$_1$=CR -,

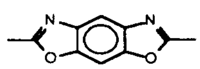 ,

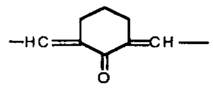 ,

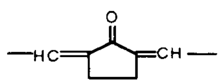 ,

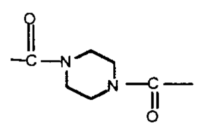 ,

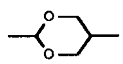 , 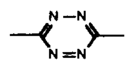 , 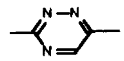

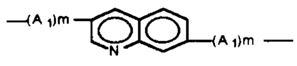 , 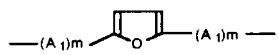 ,

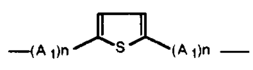 , 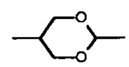 ,

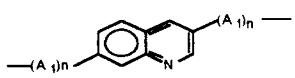 , 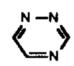 ,

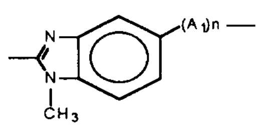 , 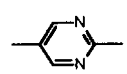

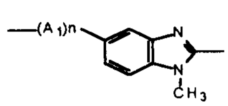 , 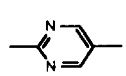 ,

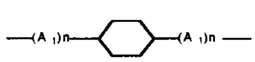 , 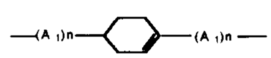 ,

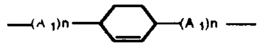 , 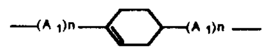 ,

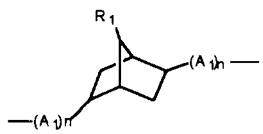 , 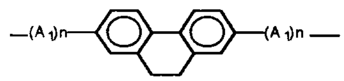 ,

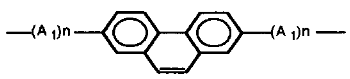 , 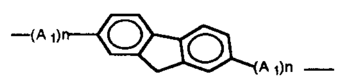

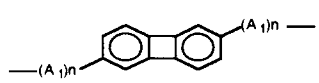

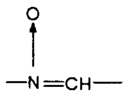 , 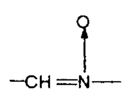 , 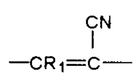 , 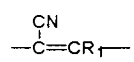 ,

or 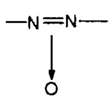

wherein each $A_1$ is independently a

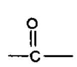 , 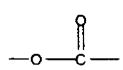 , 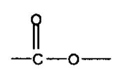 , 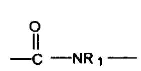 , or 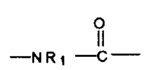

group ; each $R_1$ is independently hydrogen or a hydrocarbyl group having 1-3 carbon atoms and the aromatic rings can also contain one or more heteroatoms selected from the group consisting of N, O, S.

**3.** The polymer dispersed liquid crystal composite of claim 2 wherein the liquid crystalline main chain epoxy resin is formed from a prepolymer material having the formula:

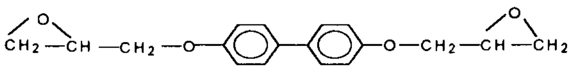

4. The polymer dispersed liquid crystal composite of claim 2 wherein the liquid crystalline main chain epoxy resin is formed from a prepolymer material selected from the group consisting of:

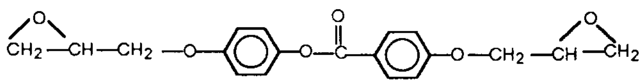

p-(2,3 epoxypropyl) phenoxy hydroxy benzoxy (DIFHB)

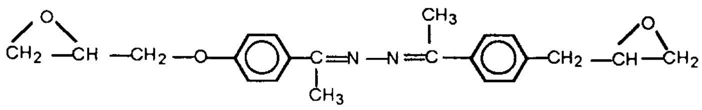

p-(2,3 epoxypropyl) acetophenone azine (EF3)

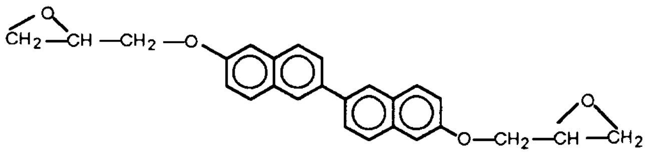

p-(2,3 epoxypropyl) binaphthalene (BIN)

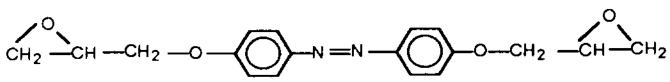

p-(2,3 epoxypropyl) schiff base (N)

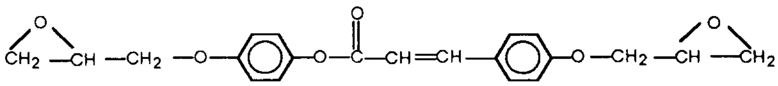

p-(2,3 epoxypropyl) chalcone (CHALC)

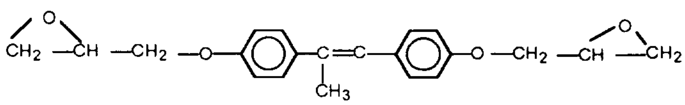

p-(2,3 epoxypropyl) alpha methyl stilbestrol (DOMS)

5. The polymer dispersed liquid crystal composite of claim 1 wherein the liquid crystalline main chain epoxy resin is formed in the presence of a curing agent having the formula:

Z-N-Z,

wherein Z is an amine group, acid group, anhydride group, and wherein N is a group containing two or more aromatic rings bridged by a rigid central linkage group and said rigid central linkage groups for bridging the aromatic rings are selected from the group consisting of a direct bond, or a $-CR_1=CR_1-$,-C=C-, -N=N-, $CR_1=N$, $-CR_1=N-N=CR_1-$,$-CR_1=CR_1-CO-$, $-O-CO-NR_1-CO-$, $-N=CR_1-$, $-CO-O-CO-NR_1$, $-CO-CR_1=CR_1-$, $-CO-O-N=CR_1$, $CR_1=N-O-OC-$, $-CO-NR_1-NR_1-OC-$, -CH =CH-O-OC-,-CO-O-CH=CH-, -O-OC-CH=CH-, - CH=CH-CO-O-, $CHR_1O-CO-CH=CH-$, $-CH=CH-CO-O-CHR_1$, $-CHR_1-CO-O-CH=CH-$, $-CH=CH-O-CO-CHR_1-$, -CO-S-, -S-OC-, $-CH_2-CH_2-O-OC-$, $-CH_2-CH_2-O-O-$, $-O-OC-CH_2-CH_2-$, -C=C-C=C-,$-CR_1=CR_1-CR_1=CR-$,

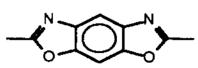
,
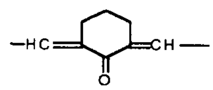
,

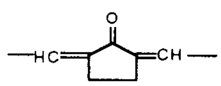
,
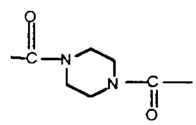
,

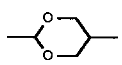
,
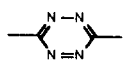
,
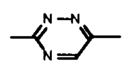

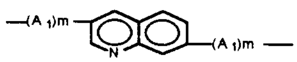
,
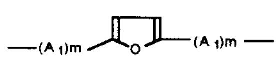
.

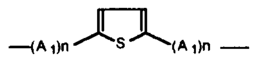 .

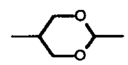 .

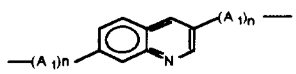 .

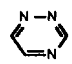 .

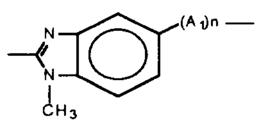 .

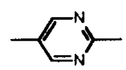

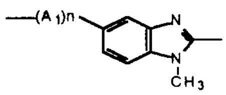 .

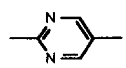 .

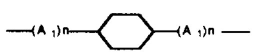 .

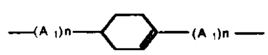 .

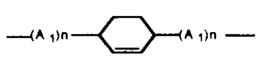 .

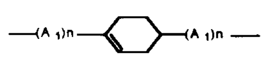 .

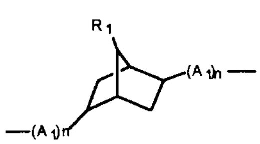 .

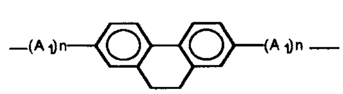 .

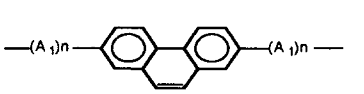 , 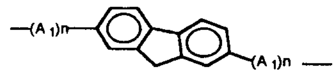 ,

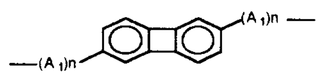

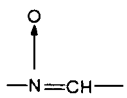 , 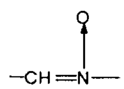 , 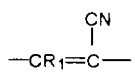 , 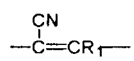 ,

or 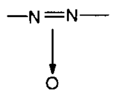

wherein each $A_1$ is independently a

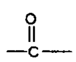 , 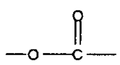 , 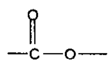 , 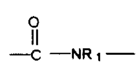 , or 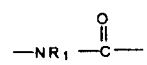

group ; each $R_1$ is independently hydrogen or a hydrocarbyl group having 1-3 carbon atoms and the aromatic rings can also contain one or more heteroatoms selected from the group consisting of N, O, S.

6. The polymer dispersed liquid crystal composite of claim 5 wherein the liquid crystalline main chain epoxy resin is formed in the presence of a curing agent having the formula:

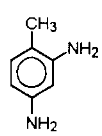

7. The polymer dispersed liquid crystal composite of claim 5 wherein the liquid crystalline main chain epoxy resin is formed in the presence of a curing agent having the formula:

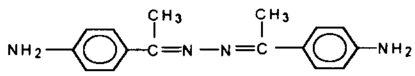

**8.** The polymer dispersed liquid crystal composite of claim 1 wherein the polymer continuous phase is isotropic with respect to the transmission of light.

**9.** The polymer dispersed liquid crystal composite of claim 1 wherein the polymer continuous phase is anisotropic with respect to the transmission of light.

**10.** A method of making a polymer dispersed liquid crystal composite comprising the steps of:

preparing a mixture comprising (a) a liquid crystalline epoxy resin prepolymer containing a rigid rodlike moiety, (b) a low molecular weight liquid crystal material, and (c) a curing agent, wherein (a), (b), and (c) are miscible; and

curing the mixture to form a polymer continuous phase wherein the liquid crystalline epoxy prepolymer containing the rigid rodlike moiety is a main chain constituent of the polymer continuous phase and a liquid crystal discontinuous phase containing the low molecular weight liquid crystal material.

**11.** The method of claim 10 wherein the liquid crystalline epoxy thermoset resin prepolymer is a compound having the formula:

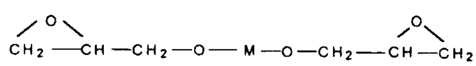

wherein M is a group containing two or more aromatic rings bridged by a rigid central linkage group and said central linkage group is selected from the group consisting of a direct bond, or a $-CR_1=CR_1-$, -C=C-, - N=N-, $CR_1=N$, $-CR_1=N-N=CR_1-$, $-CR_1=CR_1-CO-$, $-O-CO-NR_1-CO-$, $-N=CR_1-$, $-CO-O-CO-NR_1$, $-CO-CR_1=CR_1-$, $-CO-O-N=CR_1$, $CR_1=N-O-OC-$, $-CO-NR_1-NR_1-OC-$, -CH =CH-O-OC-,-CO-O-CH=CH-, -O-OC-CH=CH-, -CH-CH-CO-O-, $CHR_1O-CO-CH=CH-$, $-CH=CH-CO-O-CHR_1$, $-CHR_1-CO-O-CH=CH-$, $-CH=CH-O-CO-CHR_1-$, -CO-S-, -S-OC-, $-CH_2-CH_2-O-O-$, $-O-OC-CH_2-CH_2-$, - C=C-C=C-, $-CR_1=CR_1-CR_1=CR-$,

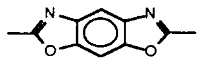 , 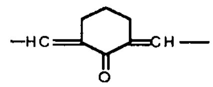

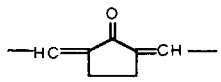 , 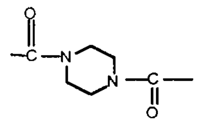 ,

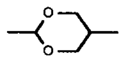 , 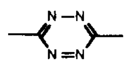 , 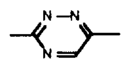

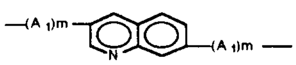 , 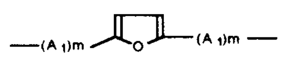 .

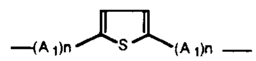 .

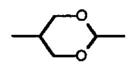 .

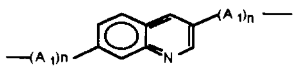 .

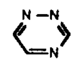 .

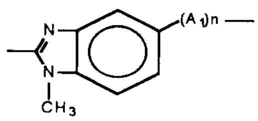 .

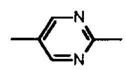

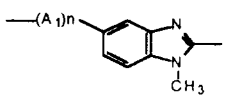 .

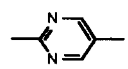 .

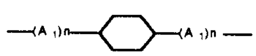 .

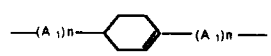 .

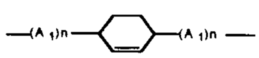 .

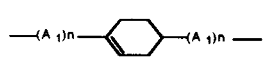 .

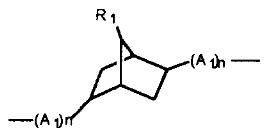 , 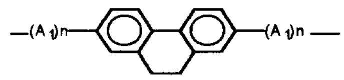 ,

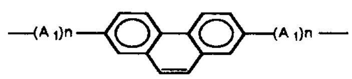 , 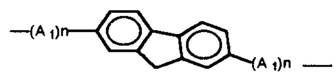 ,

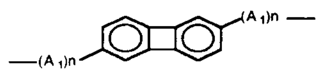

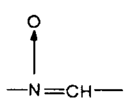 , 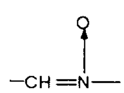 , 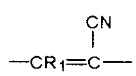 , 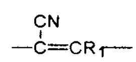 ,

or 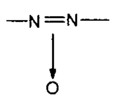

wherein each $A_1$ is independently a

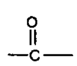 , 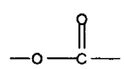 , 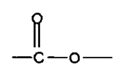 , 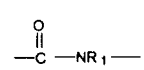 , or 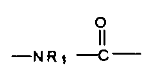

group ; each $R_1$ is independently hydrogen or a hydrocarbyl group having 1-3 carbon atoms and the aromatic rings can also contain one or more heteroatoms selected from the group consisting of N, O, S.

12. The method of claim 10 wherein the liquid crystalline epoxy resin prepolymer material is a compound having the formula:

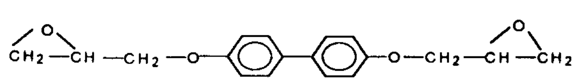

13. The method of claim 10 wherein the liquid crystalline epoxy resin prepolymer material is selected from the group consisting of:

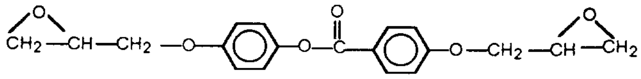

p-(2,3 epoxypropyl) phenoxy hydroxy benzoxy (DIFHB)

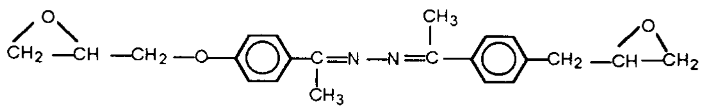

p-(2,3 epoxypropyl) acetophenone azine (EF3)

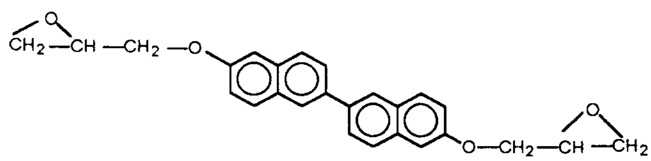

p-(2,3 epoxypropyl) binaphthalene (BIN)

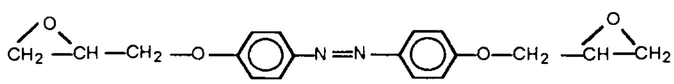

p-(2,3 epoxypropyl) schiff base (N)

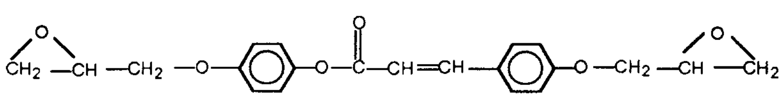

p-(2,3 epoxypropyl) chalcone (CHALC)

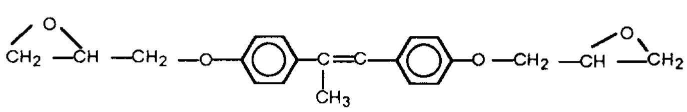

p-(2,3 epoxypropyl) alpha methyl stilbestrol (DOMS)

**14.** The method of claim 10 wherein the curing agent is a compound having the formula:

Z-N-Z,

wherein Z is an amine group, acid group, anhydride group, and wherein N is a group containing two or more aromatic rings bridged by a rigid central linkage group and said rigid central linkage groups for bridging the aromatic rings are selected from the group consisting of a direct bond, or a $-CR_1=CR_1-$,-C=C-, -N=N-, $CR_1=N$, $-CR_1=N-N=CR_1-$, $-CR_1=CR_1-CO-$, $-O-CO-NR_1-CO-$, $-N=CR_1-$, $-CO-O-CO-NR_1$, - $CO-CR_1=CR_1-$, $-CO-O-N=CR_1$, $CR_1=N-O-OC-$, $-CO-NR_1-NR_1-OC-$, -CH =CH-O-OC-,-CO-O-CH=CH-, -O-OC-CH=CH-, - CH=CH-CO-O-, $CHR_1O-CO-CH=CH-$, $-CH=CH-CO-O-CHR_1$, - $CHR_1-CO-O-CH=CH-$, $-CH=CH-O-CO-CHR_1-$, -CO-S-, -S-OC-, - $CH_2-CH_2-O-OC-$, $-CH_2-CH_2-O-O-$, $-O-OC-CH_2-CH_2-$, -C=C-C=C-, $-CR_1=CR_1-CR_1=CR-$,

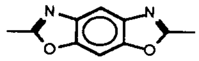 ,

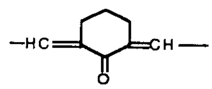 ,

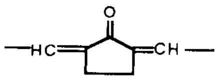 ,

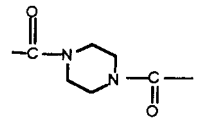 ,

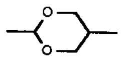 ,

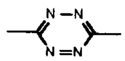 ,

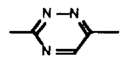

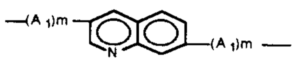 ,

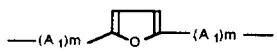 ,

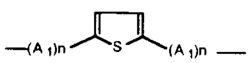 ,

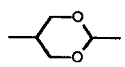 ,

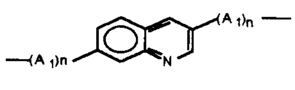 ,

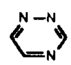 ,

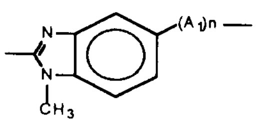 ,

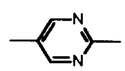

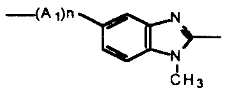 , 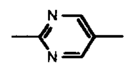 ,

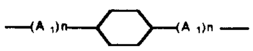 , 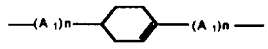 ,

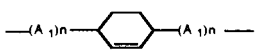 , 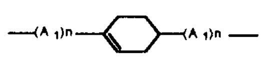 ,

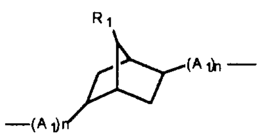 , 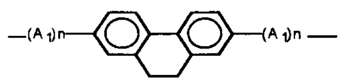 ,

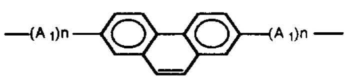 , 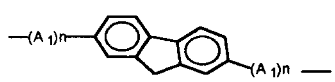

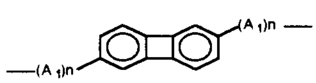

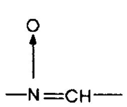 , 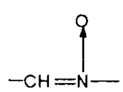 , 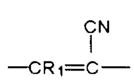 , 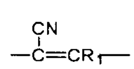 ,

or 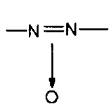

wherein each $A_1$ is independently a

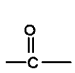 , 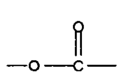 , 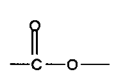 , 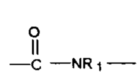 , or 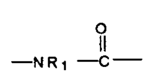

group ; each $R_1$ is independently hydrogen or a hydrocarbyl group having 1-3 carbon atoms and the aromatic rings can also contain one or more heteroatoms selected from the group consisting of N, O, S.

**15.** The method of claim 14 wherein the curing agent is the compound:

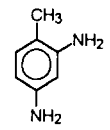

**16.** The method of claim 14 wherein the curing agent is the compound:

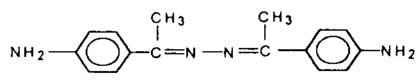

**17.** The method of claim 10 wherein the liquid crystal material comprises low molecular weight nematic or operationally nematic liquid crystal molecules having positive dielectric anisotropy.

**18.** An electrooptical device containing the polymer dispersed liquid crystal composite of any of claims 1-8.

FIGURE 1

MICROGRAPHS OF PDLC FILMS

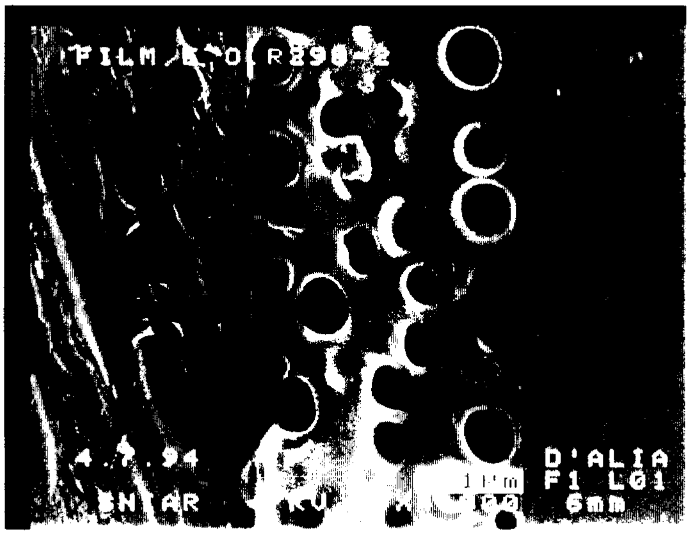


STANDARD

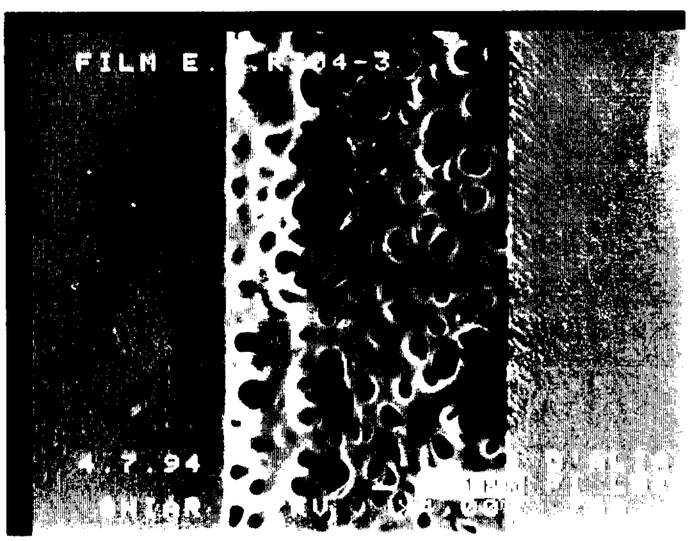


100% DOMS

FIGURE 2

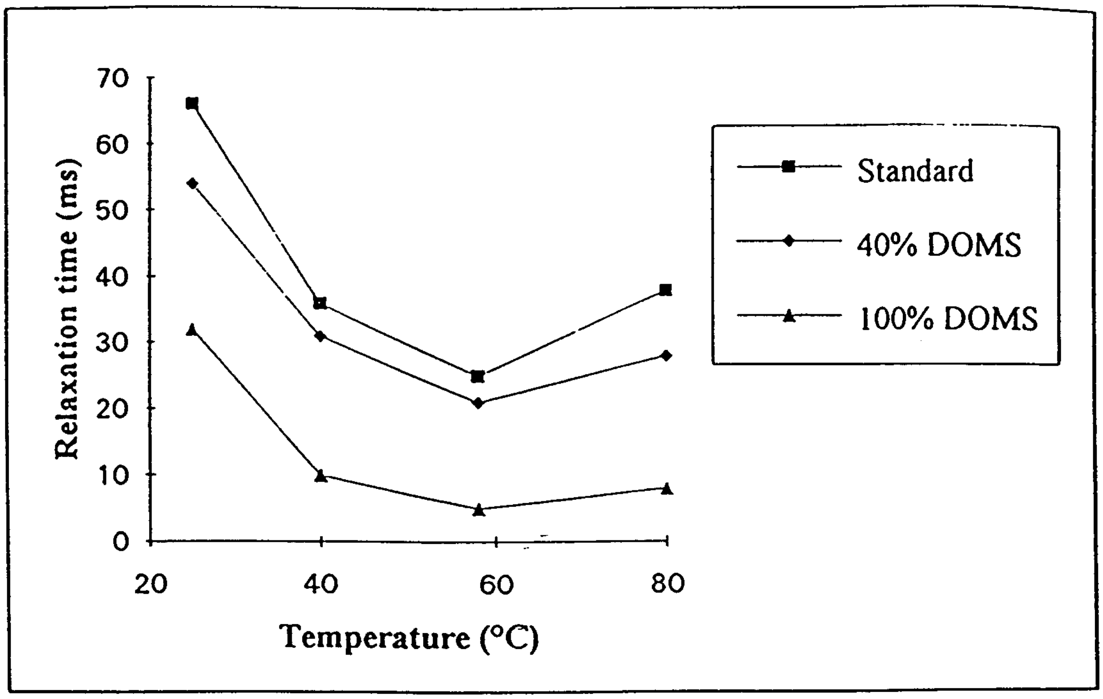
70
60
50
40
30
20
10
0
Relaxation time (ms)
20
40
60
80
Temperature (°C)
Standard
40% DOMS
100% DOMS

FIGURE 3

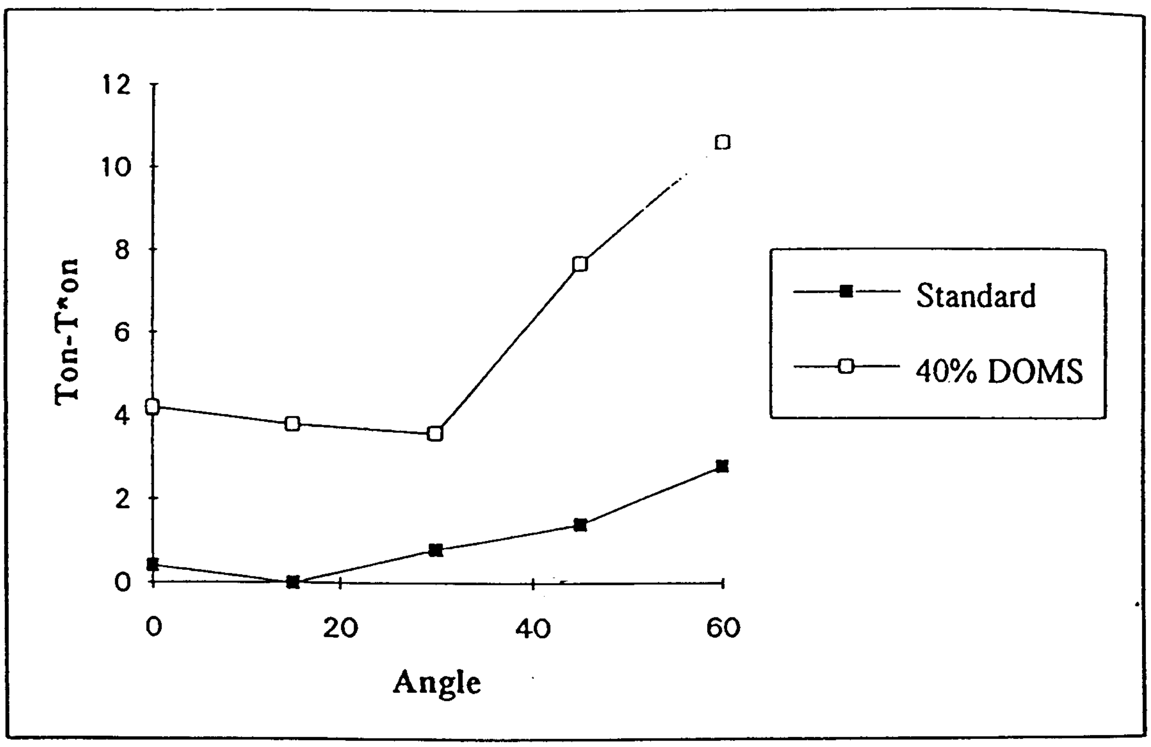

FIGURE 4

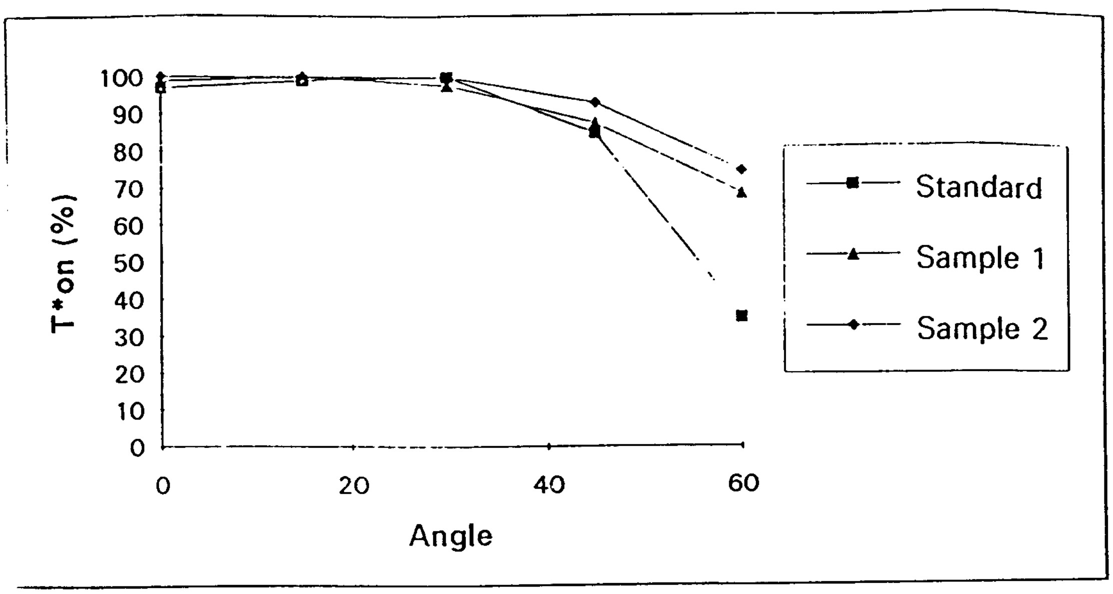
100
90
80
70
60
50
40
30
20
10
0
T*on (%)
0
20
40
60
Angle
Standard
Sample 1
Sample 2

FIGURE 5

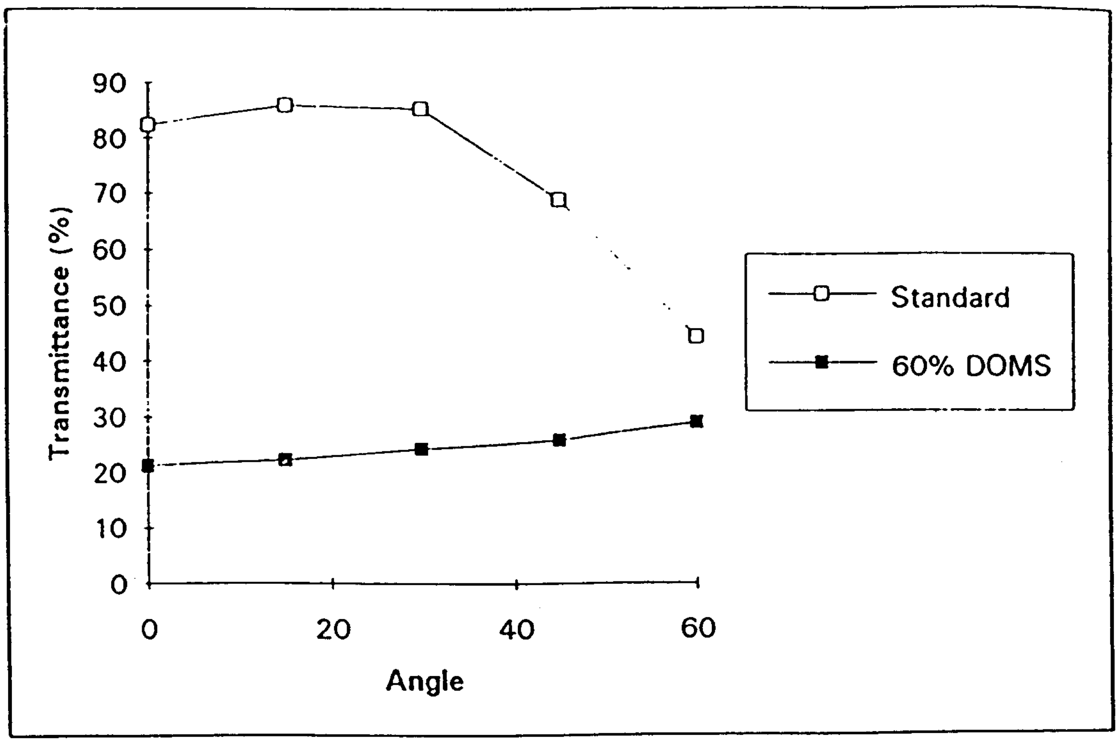
Transmittance (%)
90
80
70
60
50
40
30
20
10
0
0
20
40
60
Angle
Standard
60% DOMS

FIGURE 6

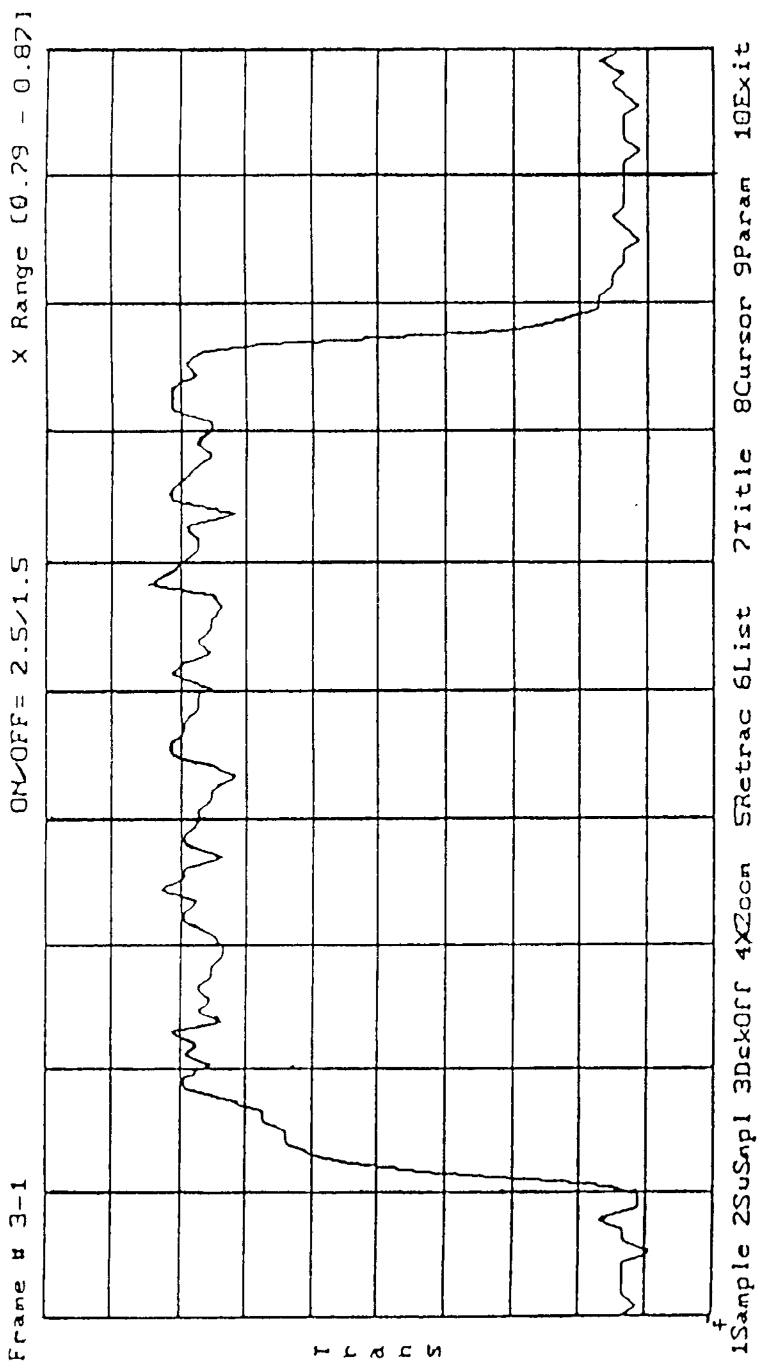
Frame # 3-1
ON/OFF= 2.5/1.5
X Range [0.79 - 0.87]
Trans
1Sample 2SuSmpl 3DckOff 4XZoom 5Retrac 6List 7Title 8Cursor 9Param 10Exit

European Patent Office

# EUROPEAN SEARCH REPORT

Application Number
EP 95 20 3618

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | WO-A-85 04262 (KENT STATE UNIVERSITY) | 1,8-10, 17,18 | C09K19/54 C09K19/38 C08G59/24 C08G59/50 |
| Y | * page 2, line 11 - page 3, line 12 * * page 7, line 10 - page 10, line 34 * --- | 1-7 | |
| Y | DE-A-40 40 471 (BAYER) * page 2, line 1 - line 10 * * page 2, line 54 - page 6, line 54 * --- | 1-7 | |
| X | WO-A-87 01822 (KENT STATE UNIVERSITY) * page 7, line 15 - line 33 * * page 45, line 23 - page 53, line 33; example I * --- | 1,9,10, 17,18 | |
| X | US-A-5 004 323 (J.L.WEST) | 1,2,5, 10,11, 14,17,18 | |
| Y | * column 2, line 12 - column 3, line 49 * * column 5, line 60 - column 6, line 26; claims 1-3,8-10,14 * --- | 1-7 | TECHNICAL FIELDS SEARCHED (Int.Cl.6) |
| X | LIQUID CRYSTALS, vol. 16, no. 1, 1 January 1994 pages 1-31, XP 000418459 KITZEROW H -S 'POLYMER-DISPERSED LIQUID CRYSTALS FROM THE NEMATIC CURVILINEAR ALIGNED PHASE TO FERROELECTRIC FILMS' * page 6, line 1 - line 24 * --- | 1,2,5, 9-11,14, 18 | C09K |
| Y | MACROMOLECULAR CHEMISTRY AND PHYSICS, vol. 195, no. 1, 1 January 1994 pages 279-287, XP 000416234 CARFAGNA C ET AL 'LIQUID-CRYSTALLINE EPOXY RESINS: A GLYCIDYL-TERMINATED BENZALDEHYDE AZINE CURED IN THE NEMATIC PHASE' * page 281 * ----- | 1,2,4,5, 7 | |

The present search report has been drawn up for all claims

| Place of search | Date of completion of the search | Examiner |
|---|---|---|
| THE HAGUE | 1 April 1996 | Boulon, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)